# EUROPEAN PATENT SPECIFICATION

(11) **EP 3 997 552 B1**
(45) Date of publication and mention of the grant of the patent: **03.07.2024**
(21) Application number: 20746809.1
(22) Date of filing: 07.07.2020
(51) Int. Cl.: G06F 3/01, G02B 27/01, G06F 3/0488, G06T 19/00, G09G 5/00

(54) **VIRTUAL USER INTERFACE USING A PERIPHERAL DEVICE IN ARTIFICIAL REALITY ENVIRONMENTS**
VIRTUELLE BENUTZERSCHNITTSTELLE MIT VERWENDUNG EINER PERIPHEREN VORRICHTUNG IN UMGEBUNGEN DER KÜNSTLICHEN REALITÄT
INTERFACE UTILISATEUR VIRTUELLE UTILISANT UN PÉRIPHÉRIQUE DANS DES ENVIRONNEMENTS DE RÉALITÉ ARTIFICIELLE

(30) Priority: 09.07.2019 US 201916506618
(43) Date of publication of application: 18.05.2022
(73) Proprietor: Meta Platforms Technologies, LLC, Menlo Park, CA 94025 (US)
(72) Inventor: ATLAS, Charlene Mary, Menlo Park, California 94025 (US); TERRANO, Mark, Menlo Park, California 94025 (US); BRAMWELL, Chad Austin, Menlo Park, California 94025 (US); VAINIO, Caryn, Menlo Park, California 94025 (US)
(74) Representative: Murgitroyd & Company
(86) International application number: PCT/US2020/041028
(87) International publication number: WO 2021/007221

(56) References cited:
- US-A1- 2016 054 791
- US-A1- 2018 173 323
- US-A1- 2019 065 026
- US-A1- 2019 146 219

## Description

### TECHNICAL FIELD

The disclosure generally relates to artificial reality systems, such as augmented reality, mixed reality, and/or virtual reality systems, and more particularly, to user interfaces in artificial reality environments.

### BACKGROUND

Artificial reality systems are becoming increasingly ubiquitous with applications in many fields such as computer gaming, health and safety, industrial, and education. As a few examples, artificial reality systems are being incorporated into mobile devices, gaming consoles, personal computers, movie theaters, and theme parks. In general, artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof.

Typical artificial reality systems include one or more devices for rendering and displaying content to users. As one example, an artificial reality system may incorporate a head-mounted display (HMD) worn by a user and configured to output artificial reality content to the user. The artificial reality content may include completely-generated content or generated content combined with captured content (e.g., real-world video and/or images). During operation, the user typically interacts with the artificial reality system to interact with virtual reality content in an artificial reality environment.

US2016054791 describes a system and method for navigating augmented reality (AR) content with a watch. The AR menu is displayed as a layer on the watch.

US2019065026 describes a head-mounted display device in which a touch-sensitive input device provides for a user input, and, in response to receiving the user input, control the 3D virtual reality experience to thereby vary visual content being rendered on the display.

US2019146219 describes augmented reality eyewear devices to allow users to experience a version of our "real" physical world augmented with virtual objects. A graphical user interface is generated by the eyewear. Anchoring various input mechanisms or the graphical user interface to a wristwatch id described.

US2018173323 describes a sensing and tracking system detects objects, such as user input devices or peripherals, and user interactions with them. A representation of the objects and user interactions are then injected into the virtual reality environment. The representation can be an actual reality, augmented reality, virtual representation or any combination.

### SUMMARY

The present invention is defined by the independent claims. The dependent claims define further advantageous embodiments.

The details of one or more examples are set forth in the accompanying drawings and the description below. Other features, objects, and advantages will be apparent from the description and drawings, and from the claims.

### BRIEF DESCRIPTION OF DRAWINGS

FIG. 1A is an illustration depicting an example artificial reality system including a head-mounted display (HMD) and a peripheral device in accordance with techniques of the disclosure.
FIG. 1B is an illustration depicting an example artificial reality system in accordance with techniques of the disclosure.
FIG. 2A is an illustration depicting an example HMD and an example peripheral device, in accordance with techniques of the disclosure.
FIG. 2B is an illustration depicting an example HMD, in accordance with techniques of the disclosure.
FIG. 3 is a block diagram showing example implementations of a console, an HMD, and a peripheral device of the artificial reality systems of FIGS. 1A, 1B in accordance with techniques of the disclosure.
FIG. 4 is a block diagram depicting an example in which user interface generation is performed by the HMD of the artificial reality systems of FIGS. 1A, 1B in accordance with techniques of the disclosure.
FIG. 5 is a flowchart illustrating operations of a peripheral device in accordance with aspects of the disclosure.
FIG. 6 is an example HMD displays illustrating interacting with artificial reality content in accordance with aspects of the disclosure.
FIGS. 7A-7C are example HMD displays illustrating a performance of one or more actions in response to a detection of a user interface gesture performed on a peripheral device in accordance with aspects of the disclosure.
FIGS. 8A-8I are example HMD displays illustrating various interactions with artificial reality content with a virtual laser pointer in accordance with aspects of the disclosure.
FIG. 9 is a block diagram illustrating an example peripheral device and virtual user interface, according to techniques of this disclosure.

Like reference characters refer to like elements throughout the description and figures.

### DETAILED DESCRIPTION

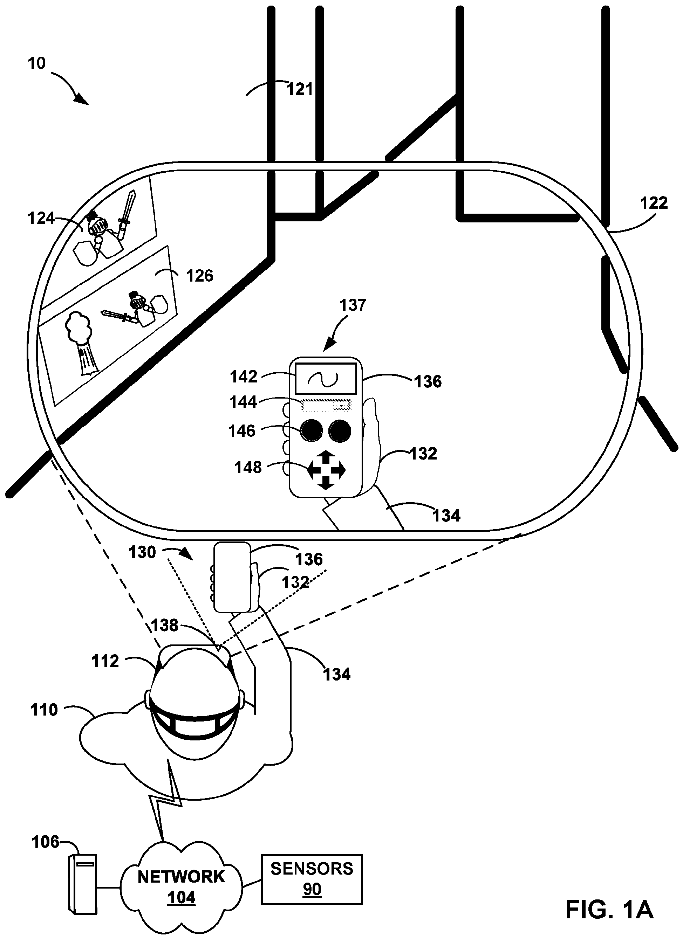

FIG. 1A is an illustration depicting an example artificial reality system, in accordance with techniques of the disclosure. In the example of FIG. 1A, artificial reality system 10 includes HMD 112, console 106, peripheral device 136, and may include one or more external sensors 90. As shown, HMD 112 is typically worn by user 110 and comprises an electronic display and optical assembly for presenting artificial reality content 122 to user 110. In addition, HMD 112 includes one or more sensors (e.g., accelerometers) for tracking motion of the HMD 112 and may include one or more image capture devices 138 (e.g., cameras, line scanners) for capturing image data of the surrounding physical environment. In this example, console 106 is shown as a single computing device, such as a gaming console, workstation, a desktop computer, or a laptop. In other examples, console 106 may be distributed across a plurality of computing devices, such as a distributed computing network, a data center, or a cloud computing system. Console 106, HMD 112, and sensors 90 may, as shown in this example, be communicatively coupled via network 104, which may be a wired or wireless network, such as Wi-Fi, a mesh network or a short-range wireless communication medium, or combination thereof. Although HMD 112 is shown in this example as in communication with, e.g., tethered to or in wireless communication with, console 106, in some implementations HMD 112 operates as a stand-alone, mobile artificial reality system.

In general, artificial reality system 10 uses information captured from a real-world, 3D physical environment to render artificial reality content 122 for display to user 110. In the example of FIG. 1A, user 110 views the artificial reality content 122 constructed and rendered by an artificial reality application executing on console 106 and/or HMD 112. In some examples, artificial reality content 122 may comprise a mixture of real-world imagery (e.g., hand 132, peripheral device 136, walls 121) and virtual objects (e.g., virtual content items 124, 126 and virtual user interface 137) to produce mixed reality and/or augmented reality. In some examples, virtual content items 124, 126 may be mapped (e.g., pinned, locked, placed) to a particular position within artificial reality content 122. A position for a virtual content item may be fixed, as relative to one of walls 121 or the earth, for instance. A position for a virtual content item may be variable, as relative to peripheral device 136 or a user, for instance. In some examples, the particular position of a virtual content item within artificial reality content 122 is associated with a position within the real world, physical environment (e.g., on a surface of a physical object).

In the example shown in FIG. 1A, virtual content items 124, 126 are mapped to positions on wall 121. The example in FIG. 1A also shows that virtual content item 124 partially appears on wall 121 only within artificial reality content 122, illustrating that this virtual content does not exist in the real world, physical environment. Virtual user interface 137 is mapped to a surface of peripheral device 136. As a result, AR system 10 renders, at a user interface position that is locked relative to a position of peripheral device 136 in the artificial reality environment, virtual user interface 137 for display at HMD 112 as part of artificial reality content 122. FIG. 1A shows that virtual user interface 137 appears on peripheral device 136 only within artificial reality content 122, illustrating that this virtual content does not exist in the real world, physical environment. As used herein, a virtual element 'locked' to a position of peripheral device 136 or other physical object is rendered at a position relative to the position of the physical object so as to appear to be part of or otherwise tied in the artificial reality environment to the physical obj ect.

In some implementations, artificial reality system 10 generates and renders virtual content items 124, 126 (e.g., GIFs, photos, applications, live-streams, videos, text, a web-browser, drawings, animations, representations of data files, or any other visible media) on a virtual surface. A virtual surface may be associated with a planar or other real-world surface (e.g., the virtual surface corresponds to and is locked to a physical planar surface, such as a wall table, or ceiling). In the example shown in FIG. 1A, the virtual surface is associated with wall 121. In other examples, a virtual surface can be associated with a portion of a surface (e.g., a portion of wall 121). In some examples, only the virtual content items contained within a virtual surface are rendered. In other examples, the virtual surface is generated and rendered (e.g., as a virtual plane or as a border corresponding to the virtual surface). In some examples, a virtual surface can be rendered as floating in a virtual or real-world physical environment (e.g., not associated with a particular real-world surface).

The artificial reality system 10 may render one or more virtual content items in response to a determination that at least a portion of the location of virtual content items is in the field of view 130 of user 110. For example, artificial reality system 10 may render virtual user interface 137 only if peripheral device 136 is within field of view 130 of user 110.

During operation, the artificial reality application constructs artificial reality content 122 for display to user 110 by tracking and computing pose information for a frame of reference, typically a viewing perspective of HMD 112. Using HMD 112 as a frame of reference, and based on a current field of view 130 as determined by a current estimated pose of HMD 112, the artificial reality application renders 3D artificial reality content which, in some examples, may be overlaid, at least in part, upon the real-world, 3D physical environment of user 110. During this process, the artificial reality application uses sensed data received from HMD 112, such as movement information and user commands, and, in some examples, data from any external sensors 90, such as external cameras, to capture 3D information within the real world, physical environment, such as motion by user 110 and/or feature tracking information with respect to user 110. Based on the sensed data, the artificial reality application determines a current pose for the frame of reference of HMD 112 and, in accordance with the current pose, renders the artificial reality content 122.

Artificial reality system 10 may trigger generation and rendering of virtual content items based on a current field of view 130 of user 110, as may be determined by real-time gaze tracking of the user, or other conditions. More specifically, image capture devices 138 of HMD 112 capture image data representative of objects in the real world, physical environment that are within a field of view 130 of image capture devices 138. Field of view 130 typically corresponds with the viewing perspective of HMD 112. In some examples, the artificial reality application presents artificial reality content 122 comprising mixed reality and/or augmented reality. As illustrated in FIG. 1A, the artificial reality application may render images of real-world objects, such as the portions of peripheral device 136, hand 132, and/or arm 134 of user 110, that are within field of view 130 along with virtual objects, such as within artificial reality content 122. In other examples, the artificial reality application may render virtual representations of the portions of peripheral device 136, hand 132, and/or arm 134 of user 110 that are within field of view 130 (e.g., render real-world objects as virtual objects) within artificial reality content 122. In either example, user 110 is able to view the portions of their hand 132, arm 134, peripheral device 136 and/or any other real-world objects that are within field of view 130 within artificial reality content 122. In other examples, the artificial reality application may not render representations of the hand 132 or arm 134 of the user.

During operation, artificial reality system 10 performs object recognition within image data captured by image capture devices 138 of HMD 112 to identify peripheral device 136, hand 132, including optionally identifying individual fingers or the thumb, and/or all or portions of arm 134 of user 110. Further, artificial reality system 10 tracks the position, orientation, and configuration of peripheral device 136, hand 132 (optionally including particular digits of the hand), and/or portions of arm 134 over a sliding window of time. In some examples, peripheral device 136 includes one or more sensors (e.g., accelerometers) for tracking motion or orientation of the peripheral device 136.

In accordance with techniques of this disclosure, artificial reality system 10 presents a virtual user interface 137 with which users may interact with using a physical device, referred to as a "peripheral device." Peripheral device 136 is a physical, real-world device having a surface on which AR system 10 overlays virtual user interface 137. That is, AR system 10 virtually renders virtual user interface 137 at a position and orientation so that virtual user interface 137 appears to be a surface of peripheral device 136 or juxtaposed with the surface of peripheral device 136. In this respect, peripheral device 136 operates as a stage for virtual content, such as virtual user interface 137. Peripheral device 136 may include one or more presence-sensitive surfaces for detecting user inputs by detecting a presence of one or more objects (e.g., fingers, stylus) touching or hovering over locations of the presence-sensitive surface. In some examples, peripheral device 136 may include an output display, which may be a presence-sensitive display. AR system 10 may cause peripheral device 136 to deactivate (i.e., turn off) the output display when rendering virtual user interface 137. AR system 10 only renders virtual user interface 137 when the output display is deactivated. In some examples, peripheral device 136 does not include an output display however.

In some examples, peripheral device 136 may be a smartphone, tablet computer, personal data assistant (PDA), or other hand-held device. In some examples, peripheral device 136 may be a smartwatch, smartring, or other wearable device. Peripheral device 136 may also be part of kiosk or other stationary or mobile system. Peripheral device 136 may or may not include a display device for outputting content to a screen. Peripheral device 136 may be in communication with HMD 112 and/or console 106 using one or more wired or wireless communications links (e.g., Wi-Fi, near-field communication of short-range wireless communication such as Bluetooth).

The AR system 10 renders, to HMD, glasses or other display device 112, AR content in which virtual user interface 137 is locked to a surface of peripheral device 136. That is, the AR system 10 may render virtual user interface 137 having one or more virtual user interface elements at a position and orientation in the virtual environment that is based on and corresponds to the position and orientation of the physical peripheral device 136 in the physical environment 130. For example, if the peripheral device 136 is positioned in a vertical position (referred to as "portrait mode"), the AR system 10 may render the virtual user interface in portrait mode and at a location corresponding to the position and orientation of the peripheral device 136. If the peripheral device 136 is positioned in a horizontal position (referred to as "landscape mode"), the AR system 10 may render the virtual user interface in landscape mode and at a location corresponding to the position and orientation of the peripheral device 136. In this way, the virtual user interface being rendered in the virtual environment may track the handheld physical peripheral device 136 such that peripheral device 136 appears, to the user, to be outputting virtual user interface 137 on a surface of peripheral device 136.

Virtual user interface 137 includes one or more virtual user interface elements. Virtual user interface elements may include, for instance, a virtual drawing interface 142, a selectable menu 144 (e.g., a drop-down menu), virtual buttons 146, a directional pad 148, a keyboard, or other user-selectable user interface elements, glyphs, display elements, content, user interface controls, and so forth. The particular virtual user interface elements for virtual user interface 137 may be context-driven based on the current AR applications engaged by the user.

When a user performs a user interface gesture in the virtual environment at a location that corresponds to one of the virtual user interface elements of virtual user interface 137 overlaid on the peripheral device 136, the AR system 10 detects the user interface and performs an action. For example, the user may press their finger at a physical location on the peripheral device 136 corresponding to a position in the virtual environment at which the AR system 10 renders a virtual user interface button 146 on virtual user interface 137. In this example, the AR system 10 detects this virtual button press gesture and performs an action corresponding to the detected press of a virtual user interface button 146. The AR system 10 may also, for instance, animate a press of the virtual user interface button along with the button press gesture.

AR system 10 may detect user interface gestures and other gestures using an inside-out or outside-in tracking system of image capture devices 138 and or external cameras. AR system 10 may alternatively, or in addition, detect user interface gestures and other gestures using a presence-sensitive surface. That is, a presence-sensitive interface of peripheral device 136 may receive user inputs that make up a user interface gesture.

Peripheral device 136 provides haptic feedback to touch-based user interaction by having a physical surface with which the user can interact (e.g., touch, drag a finger across, grab, and so forth). In addition, peripheral device 136 may output other indications of user interaction using an output device. For example, in response to a detected press of a virtual user interface button 146, peripheral device 136 may output a vibration or "click" noise, or peripheral device 136 may generate and output content to a display.

In some examples, the user may press and drag their finger along physical locations on the peripheral device 136 corresponding to positions in the virtual environment at which the AR system 10 renders virtual drawing interface 142 of virtual user interface 137. In this example, the AR system 10 detects this drawing gesture and performs an action according to the detected press and drag of a virtual drawing interface 142, such as by generating and rendering virtual markings at the positions in the virtual environment. In this way, AR system 10 simulates drawing or writing on peripheral device 136 using virtual user interface 137.

In some examples, the user may press their finger at a physical location on the peripheral device 136 corresponding to a position in the virtual environment at which the AR system 10 renders a virtual selectable menu 144. In this example, the AR system 10 detects this user interface gesture and performs an action according to the detected press of a virtual selectable menu 144. The virtual selectable menu 144 may comprise a drop-down menu, a pie menu, a list menu, or any menu including a plurality of selectable items. In some examples, the virtual selectable menu 144 include sub-menus, such that when a user selects an item in a main menu of the virtual selectable menu 144, the AR system 10 would render a sub-menu of one or more items corresponding to the selected item in the main menu, the one or more items further selectable by the user. In this way, AR system 10 simulates interacting with a menu on peripheral device 136 using virtual user interface 137.

In some examples, the user may press their finger at a physical location on the peripheral device 136 corresponding to a position in the virtual environment at which the AR system 10 renders a virtual directional pad 148. In this example, the AR system 10 detects this user interface gesture and performs an action according to the detected press of virtual directional pad 148. In this way, AR system 10 simulates interacting with a directional pad on peripheral device 136 using virtual user interface 137.

Accordingly, techniques of the disclosure provide specific technical improvements to the computer-related field of rendering and displaying content by an artificial reality system, which may provide one or more practical applications. For example, artificial reality systems as described herein may provide a high-quality artificial reality experience to a user, such as user 110, of the artificial reality application by generating and rendering virtual user interface 137 locked to a surface of peripheral device 136 and detecting gestures performed by user 110 with respect to peripheral device 136.

In addition, AR systems as described herein may be configured to detect gestures that provide self-haptic feedback to the user. For example, one or more fingers on each hand 132 of the user 110 may touch or approximately touch peripheral device 136 in the physical world as part an interaction with a particular virtual user interface element of virtual user interface 137 in the artificial reality content. The touch between the one or more fingers of the user's hand 132 and the peripheral device may provide the user with a simulation of the sensation felt by the user when interacting directly with a physical user input object, such as a button on a physical keyboard or other physical input device.

As another example, AR systems as described herein can enable the user to provide fine-grained user inputs with respect to virtual user interface elements rendered virtually on a peripheral device 136 that provides haptic feedback, in contrast to free-floating virtual user interfaces in the artificial reality environment. This can simplify and improve the precision of gesture detection. In addition, peripheral device 136 may not display the user interface elements at its own display and may not even include a display. The techniques may therefore additionally reduce power consumption and simplify AR applications by eliminating a separate interface that would otherwise need to be generated and displayed, at a presence-sensitive display of a smartphone or tablet for instance, for receiving precision inputs from a user. In some examples, receiving user inputs with a presence-sensitive surface may provide more precise gesture detection than image-based gesture detection techniques.

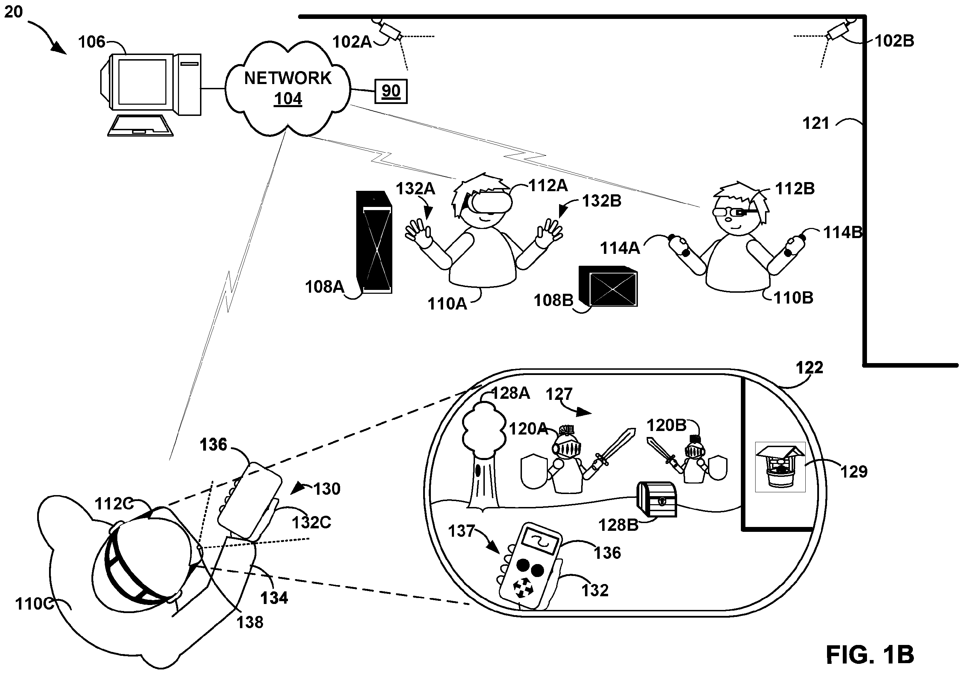

FIG. 1B is an illustration depicting another example artificial reality system 20 in accordance with techniques of the disclosure. Similar to artificial reality system 10 of FIG. 1A, artificial reality system 20 of FIG. 1B may present and control virtual user interface 137 locked to a position of peripheral device 136 in the artificial reality environment.

In the example of FIG. 1B, artificial reality system 20 includes external cameras 102A and 102B (collectively, "external cameras 102"), HMDs 112A-112C (collectively, "HMDs 112"), controllers 114A and 114B (collectively, "controllers 114"), console 106, physical peripheral device 136, and sensors 90. As shown in FIG. 1B, artificial reality system 20 represents a multi-user environment in which an artificial reality application executing on console 106 and/or HMDs 112 presents artificial reality content to each of users 110A-110C (collectively, "users 110") based on a current viewing perspective of a corresponding frame of reference for the respective user. That is, in this example, the artificial reality application constructs artificial content by tracking and computing pose information for a frame of reference for each of HMDs 112. Artificial reality system 20 uses data received from cameras 102, HMDs 112, and controllers 114 to capture 3D information within the real world environment, such as motion by users 110 and/or tracking information with respect to users 110 and objects 108, for use in computing updated pose information for a corresponding frame of reference of HMDs 112. As one example, the artificial reality application may render, based on a current viewing perspective determined for HMD 112C, artificial reality content 122 having virtual objects 128A-128B (collectively, "virtual objects 128") as spatially overlaid upon real world objects 108A-108B (collectively, "real world objects 108"). Further, from the perspective of HMD 112C, artificial reality system 20 renders avatars 120A, 120B based upon the estimated positions for users 110A, 110B, respectively.

Each of HMDs 112 concurrently operates within artificial reality system 20. In the example of FIG. 1B, each of users 110 may be a "player" or "participant" in the artificial reality application, and any of users 110 may be a "spectator" or "observer" in the artificial reality application. HMD 112C may operate substantially similar to HMD 112 of FIG. 1A by tracking hand 132 and/or arm 134 of user 110C and rendering the portions of hand 132 that are within field of view 130 as virtual hand 136 within artificial reality content 122. HMD 112B may receive user inputs from controllers 114 held by user 110B. In some examples, controller 114A and/or 114B can correspond to peripheral device 136 of FIG. 1A and operate substantially similar to peripheral device 136 of FIG. 1A. HMD 112A may also operate substantially similar to HMD 112 of FIG. 1A and receive user inputs in the form of gestures performed on or with peripheral device 136 by of hands 132A, 132B of user 110A. HMD 112B may receive user inputs from controllers 114 held by user 110B. Controllers 114 may be in communication with HMD 112B using near-field communication of short-range wireless communication such as Bluetooth, using wired communication links, or using other types of communication links.

In a manner similar to the examples discussed above with respect to FIG. 1A, console 106 and/or HMD 112C of artificial reality system 20 generates and renders virtual user interface 136 at a position locked to a surface of peripheral device 136. That is, console 106 and/or HMD 112C may render virtual user interface 137 having one or more virtual user interface elements at a position and orientation in the virtual environment that is based on and corresponds to the position and orientation of the physical peripheral device 136 in the physical environment.

As shown in FIG. 1B, in addition to or alternatively to image data captured via one or more image capture devices 138 of HMD 112C, input data from external cameras 102 may be used to track and detect particular motions, configurations, positions, and/or orientations of peripheral device 136 and/or hands and arms of users 110, such as hand 132 of user 110C, including movements of individual and/or combinations of digits (fingers, thumb) of the hand. In this way, AR system 20 can overlay virtual user interface 137 on the surface of peripheral device 136 while tracking peripheral device 136 to ensure virtual user interface 137 moves in the virtual environment along with movements of peripheral device 136 in the physical environment.

In some aspects, the artificial reality application can run on console 106, and can utilize image capture devices 102A and 102B to analyze configurations, positions, and/or orientations of hand 132B to identify input gestures that may be performed by a user of HMD 112A. Similarly, HMD 112C can utilize image capture device 138 to analyze configurations, positions, and/or orientations of peripheral device 136 and hand 132C to input gestures that may be performed by a user of HMD 112C. In some examples, peripheral device 136 includes one or more sensors (e.g., accelerometers) for tracking motion or orientation of the peripheral device 136. The artificial reality application may render virtual content items and/or user interface elements, responsive to such gestures, in a manner similar to that described above with respect to FIG. 1A.

Image capture devices 102 and 138 may capture images in the visible light spectrum, the infrared spectrum, or other spectrum. Image processing described herein for identifying objects, object poses, and gestures, for example, may include processing infrared images, visible light spectrum images, and so forth.

Virtual user interface 137 is mapped to a surface of peripheral device 136. As a result, AR system 10 renders, at a user interface position that is locked relative to a position of peripheral device 136 in the artificial reality environment, virtual user interface 137 for display at HMD 112C as part of artificial reality content 122. FIG. 1B shows that virtual user interface 137 appears on peripheral device 136 only within artificial reality content 122, illustrating that this virtual content does not exist in the real world, physical environment.

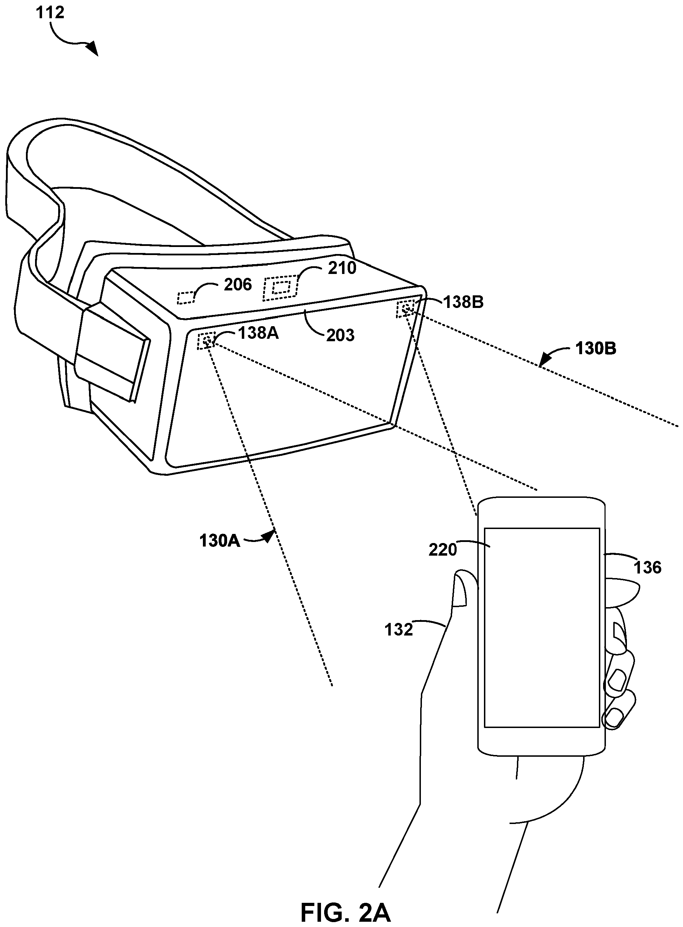

FIG. 2A is an illustration depicting an example HMD 112 and an example peripheral device 136, in accordance with techniques of the disclosure. HMD 112 of FIG. 2A may be an example of any of HMDs 112 of FIGS. 1A and 1B. HMD 112 may be part of an artificial reality system, such as artificial reality systems 10, 20 of FIGS. 1A, 1B, or may operate as a stand-alone, mobile artificial realty system configured to implement techniques described herein.

In this example, HMD 112 includes a front rigid body and a band to secure HMD 112 to a user. In addition, HMD 112 includes an interior-facing electronic display 203 configured to present artificial reality content to the user. Electronic display 203 may be any suitable display technology, such as liquid crystal displays (LCD), quantum dot display, dot matrix displays, light emitting diode (LED) displays, organic light-emitting diode (OLED) displays, cathode ray tube (CRT) displays, e-ink, or monochrome, color, or any other type of display capable of generating visual output. In some examples, the electronic display is a stereoscopic display for providing separate images to each eye of the user. In some examples, the known orientation and position of display 203 relative to the front rigid body of HMD 112 is used as a frame of reference, also referred to as a local origin, when tracking the position and orientation of HMD 112 for rendering artificial reality content according to a current viewing perspective of HMD 112 and the user. In other examples, HMD 112 may take the form of other wearable head mounted displays, such as glasses or goggles.

As further shown in FIG. 2A, in this example, HMD 112 further includes one or more motion sensors 206, such as one or more accelerometers (also referred to as inertial measurement units or "IMUs") that output data indicative of current acceleration of HMD 112, GPS sensors that output data indicative of a location of HMD 112, radar or sonar that output data indicative of distances of HMD 112 from various objects, or other sensors that provide indications of a location or orientation of HMD 112 or other objects within a physical environment. Moreover, HMD 112 may include integrated image capture devices 138A and 138B (collectively, "image capture devices 138"), such as video cameras, laser scanners, Doppler radar scanners, depth scanners, or the like, configured to output image data representative of the physical environment. More specifically, image capture devices 138 capture image data representative of objects (including peripheral device 136 and/or hand 132) in the physical environment that are within a field of view 130A, 130B of image capture devices 138, which typically corresponds with the viewing perspective of HMD 112. HMD 112 includes an internal control unit 210, which may include an internal power source and one or more printed-circuit boards having one or more processors, memory, and hardware to provide an operating environment for executing programmable operations to process sensed data and present artificial reality content on display 203.

In some examples, control unit 210 is configured to, based on the sensed data (e.g., image data captured by image capture devices 138, position information from GPS sensors), generate and render for display on display 203 a virtual surface comprising one or more virtual content items (e.g., virtual content items 124, 126 of FIG. 1A) associated with a position contained within field of view 130A, 130B of image capture devices 138. As explained with reference to FIGS. 1A-1B, a virtual content item may be associated with a position within a virtual surface that is associated with a physical surface within a real-world environment, and control unit 210 can be configured to render the virtual content item (or portion thereof) for display on display 203 in response to a determination that the position associated with the virtual content (or portion therefore) is within the current field of view 130A, 130B. In some examples, a virtual surface is associated with a position on a planar or other surface (e.g., a wall), and control unit 210 will generate and render the portions of any virtual content items contained within that virtual surface when those portions are within field of view 130A, 130B.

In some examples, in accordance with techniques described herein, control unit 210 is configured to, based on the sensed data, identify a specific gesture or combination of gestures performed by the user and, in response, perform an action. For example, in response to one identified gesture, control unit 210 may generate and render a specific user interface for display on electronic display 203 at a position locked relative to peripheral device 136. For example, control unit 210 can generate and render a user interface including one or more user interface elements (e.g., virtual buttons) on surface 220 of peripheral device 136. As explained herein, in accordance with techniques of the disclosure, control unit 210 may perform object recognition within image data captured by image capture devices 138 to identify peripheral device 136 and/or a hand 132, fingers, thumb, arm or another part of the user, and track movements, positions, configuration, etc., of the peripheral device 136 and/or identified part(s) of the user to identify pre-defined gestures performed by the user. In response to identifying a pre-defined gesture, control unit 210 takes some action, such as selecting an option from an option set associated with a user interface (e.g., selecting an option from a user interface menu), translating the gesture into input (e.g., characters), launching an application, manipulating virtual content (e.g., moving, rotating a virtual content item), generating and rendering virtual markings, generating and rending a laser pointer, or otherwise displaying content, and the like. For example, control unit 210 can dynamically generate and present a user interface, such as a menu, in response to detecting a pre-defined gesture specified as a "trigger" for revealing a user interface (e.g., turning peripheral device to a landscape or horizontal orientation (not shown)). In some examples, control unit 210 detects user input, based on the sensed data, with respect to a rendered user interface (e.g., a tapping gesture performed on a virtual user interface element). In some examples, control unit 210 performs such functions in response to direction from an external device, such as console 106, which may perform, object recognition, motion tracking and gesture detection, or any part thereof.

As an example, control unit 210 can utilize image capture devices 138A and 138B to analyze configurations, positions, movements, and/or orientations of peripheral device 136, hand 132 and/or arm 134 to identify a user interface gesture, selection gesture, stamping gesture, translation gesture, rotation gesture, drawing gesture, pointing gesture, etc., that may be performed by users with respect to peripheral device 136. The control unit 210 can render a virtual user interface (including virtual user interface elements) and/or a virtual surface (including any virtual content items) and enable the user to interface with the virtual user interface and/or virtual surface based on detection of a user interface gesture, selection gesture, stamping gesture, translation gesture, rotation gesture, and drawing gesture performed by the user with respect to the peripheral device, as described in further detail below.

In one example, in accordance with techniques described herein, surface 220 of peripheral device 136 is a presence-sensitive surface, such as a surface that uses capacitive, conductive, resistive, acoustic, or other technology to detect touch and/or hover input. In some examples, surface 220 of peripheral device 136 is a touchscreen (e.g., a capacitive touchscreen, resistive touchscreen, surface acoustic wave (SAW) touchscreen, infrared touchscreen, optical imaging touchscreen, acoustic pulse recognition touchscreen, or any other touchscreen). In such an example, peripheral device 136 can detect user input (e.g., touch or hover input) on surface 220. In some examples, surface 220 does not include a display and peripheral device 136 does not include a display.

In examples with a touchscreen for surface 220, peripheral device 136 may communicate detected user input to HMD 112 (and/or console 106 of FIG. 1A) using wireless communications links (e.g., Wi-Fi, near-field communication of short-range wireless communication such as Bluetooth), using wired communication links (not shown), or using other types of communication links. In some examples, peripheral device 136 can include one or more input devices 222 (e.g., buttons, trackball, scroll wheel) for interacting with virtual content (e.g., to select a virtual user interface element, scroll through virtual user interface elements).

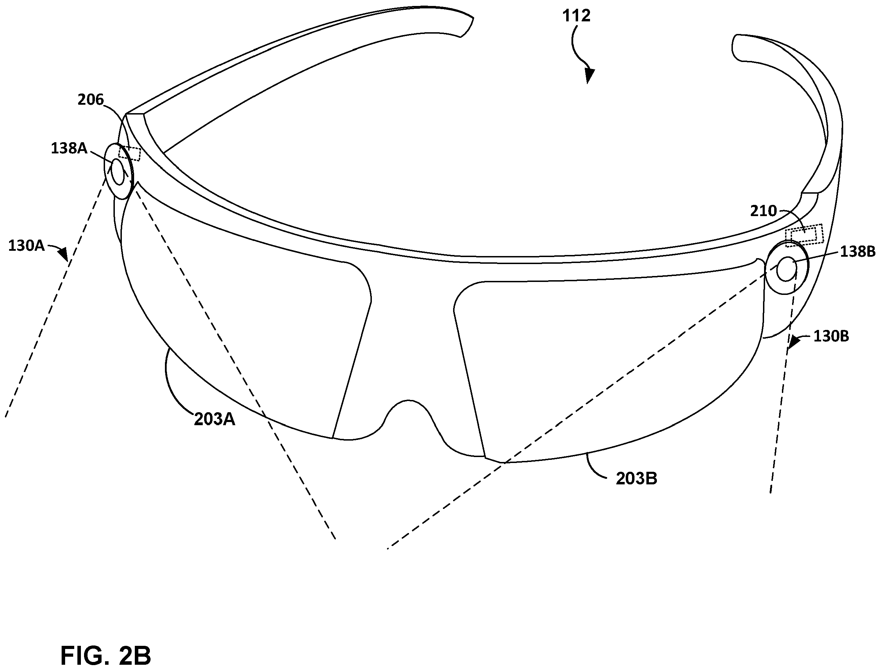

FIG. 2B is an illustration depicting an example HMD 112, in accordance with techniques of the disclosure. As shown in FIG. 2B, HMD 112 may take the form of glasses. HMD 112 of FIG. 2A may be an example of any of HMDs 112 of FIGS. 1A and 1B. HMD 112 may be part of an artificial reality system, such as artificial reality systems 10, 20 of FIGS. 1A, 1B, or may operate as a stand-alone, mobile artificial realty system configured to implement techniques described herein.

In this example, HMD 112 are glasses comprising a front frame including a bridge to allow the HMD 112 to rest on a user's nose and temples (or "arms") that extend over the user's ears to secure HMD 112 to the user. In addition, HMD 112 of FIG. 2B includes interior-facing electronic displays 203A and 203B (collectively, "electronic displays 203") configured to present artificial reality content to the user. Electronic displays 203 may be any suitable display technology, such as liquid crystal displays (LCD), quantum dot display, dot matrix displays, light emitting diode (LED) displays, organic light-emitting diode (OLED) displays, cathode ray tube (CRT) displays, e-ink, or monochrome, color, or any other type of display capable of generating visual output. In the example shown in FIG. 2B, electronic displays 203 form a stereoscopic display for providing separate images to each eye of the user. In some examples, the known orientation and position of display 203 relative to the front frame of HMD 112 is used as a frame of reference, also referred to as a local origin, when tracking the position and orientation of HMD 112 for rendering artificial reality content according to a current viewing perspective of HMD 112 and the user.

As further shown in FIG. 2B, in this example, HMD 112 further includes one or more motion sensors 206, such as one or more accelerometers (also referred to as inertial measurement units or "IMUs") that output data indicative of current acceleration of HMD 112, GPS sensors that output data indicative of a location of HMD 112, radar or sonar that output data indicative of distances of HMD 112 from various objects, or other sensors that provide indications of a location or orientation of HMD 112 or other objects within a physical environment. Moreover, HMD 112 may include integrated image capture devices 138A and 138B (collectively, "image capture devices 138"), such as video cameras, laser scanners, Doppler radar scanners, depth scanners, or the like, configured to output image data representative of the physical environment. HMD 112 includes an internal control unit 210, which may include an internal power source and one or more printed-circuit boards having one or more processors, memory, and hardware to provide an operating environment for executing programmable operations to process sensed data and present artificial reality content on display 203.

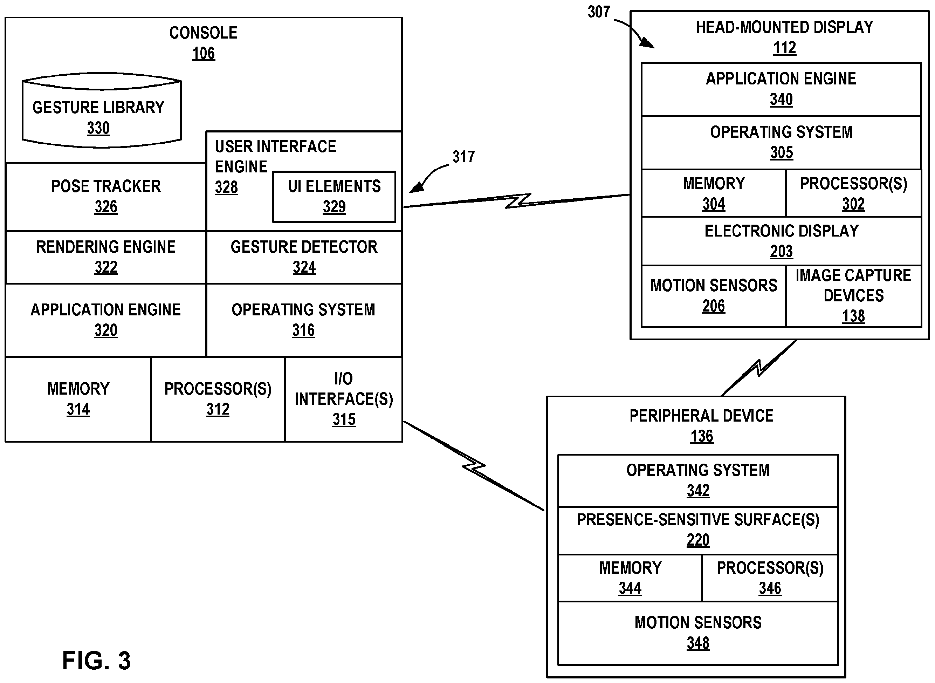

FIG. 3 is a block diagram showing example implementations of console 106, HMD 112, and peripheral device 136 of artificial reality system 10, 20 of FIGS 1A, 1B. In the example of FIG. 3, console 106 performs pose tracking, gesture detection, and virtual user interface generation and rendering for HMD 112 in accordance with techniques described herein based at least on sensed data, such as motion data and image data received from HMD 112 and/or external sensors, and in some cases on indications of user input received by peripheral device 136.

In this example, HMD 112 includes one or more processors 302 and memory 304 that, in some examples, provide a computer platform for executing an operating system 305, which may be an embedded, real-time multitasking operating system, for instance, or other type of operating system. In turn, operating system 305 provides a multitasking operating environment for executing one or more software components 307, including application engine 340. As discussed with respect to the examples of FIGS. 2A and 2B, processors 302 are coupled to electronic display 203, motion sensors 206 and image capture devices 138. In some examples, processors 302 and memory 304 may be separate, discrete components. In other examples, memory 304 may be on-chip memory collocated with processors 302 within a single integrated circuit.

In general, console 106 is a computing device that processes image and tracking information received from cameras 102 (FIG. 1B) and/or image capture devices 138 of HMD 112 (FIGS. 1A, 2A, 2B) to perform gesture detection and user interface and/or virtual content generation for HMD 112. In some examples, console 106 is a single computing device, such as a workstation, a desktop computer, a laptop, or gaming system. In some examples, at least a portion of console 106, such as processors 312 and/or memory 314, may be distributed across a cloud computing system, a data center, or across a network, such as the Internet, another public or private communications network, for instance, broadband, cellular, Wi-Fi, and/or other types of communication networks for transmitting data between computing systems, servers, and computing devices.

In the example of FIG. 3, console 106 includes one or more processors 312 and memory 314 that, in some examples, provide a computer platform for executing an operating system 316, which may be a multitasking operating system, for instance, or other type of operating system. In turn, operating system 316 provides a multitasking operating environment for executing one or more software components 317. Processors 312 are coupled to one or more I/O interfaces 315, which provides one or more I/O interfaces for communicating with external devices, such as a keyboard, game controllers, display devices, image capture devices, HMDs, and the like. Moreover, the one or more I/O interfaces 315 may include one or more wired or wireless network interface controllers (NICs) for communicating with a network, such as network 104.

Software applications 317 of console 106 operate to provide an overall artificial reality application. In this example, software applications 317 include application engine 320, rendering engine 322, gesture detector 324, pose tracker 326, and user interface engine 328.

In general, application engine 320 includes functionality to provide and present an artificial reality application, e.g., a teleconference application, a gaming application, a navigation application, an educational application, training or simulation applications, or other application. Application engine 320 may include, for example, one or more software packages, software libraries, hardware drivers, and/or Application Program Interfaces (APIs) for implementing an artificial reality application on console 106. Responsive to control by application engine 320, rendering engine 322 generates 3D artificial reality content for display to the user by application engine 340 of HMD 112.

Application engine 320 and rendering engine 322 construct the artificial content for display to user 110 in accordance with current pose information for a frame of reference, typically a viewing perspective of HMD 112, as determined by pose tracker 326. Based on the current viewing perspective, rendering engine 322 constructs the 3D, artificial reality content which may in some cases be overlaid, at least in part, upon the real-world 3D environment of user 110. During this process, pose tracker 326 operates on sensed data received from HMD 112, such as movement information and user commands, and, in some examples, data from any external sensors 90 (FIGS. 1A, 1B), such as external cameras, to capture 3D information within the real world environment, such as motion by user 110 and/or feature tracking information with respect to user 110. Based on the sensed data, pose tracker 326 determines a current pose for the frame of reference of HMD 112 and, in accordance with the current pose, constructs the artificial reality content for communication, via the one or more I/O interfaces 315, to HMD 112 for display to user 110.

Pose tracker 326 may determine a current pose for peripheral device 136 and, in accordance with the current pose, trigger certain functionality associated with virtual content that is locked to peripheral device 136 (e.g., places a virtual content item onto a virtual surface, manipulates a virtual content item, generates and renders one or more virtual markings, generates and renders a laser pointer). In some examples, pose tracker 326 detects whether the HMD 112 is proximate to a physical position corresponding to a virtual surface (e.g., a virtual pinboard) to trigger rendering of virtual content.

User interface engine 328 is configured to generate virtual user interfaces for rendering in an artificial reality environment. User interface engine 328 generates a virtual user interface to include one or more virtual user interface elements 329, such as elements 142, 144, 146, and 148 described above with respect to FIG. 1A. Rendering engine 322 is configured to render, based on a current pose for peripheral device 136, the virtual user interface at a user interface position, in the artificial reality environment, that is locked relative to a position of peripheral device 136 in the artificial reality environment. The user interface position may be a position of one of presence-sensitive surfaces 220, and rendering engine 322 may scale, rotate, and otherwise transform the virtual user interface to apply projection to match the pose, size, and perspective of the presence-sensitive surface 220 such that the virtual user interface appears, in the artificial reality environment, to be overlaid on the presence-sensitive surface 220. User interface engine 328 may generate virtual user interface to be partially transparent, allowing presence-sensitive surface 220 to be seen by the user. This degree of transparency may be configurable.

Console 106 may output this virtual user interface and other artificial reality content, via a communication channel, to HMD 112 for display at HMD 112. Rendering engine 322 receives pose information for peripheral device 136 to continually update the user interface position and pose to match that of the peripheral device 136, such as that of one of presence-sensitive surfaces 220.

Based on the sensed data from any of the image capture devices 138 or 102, presence-sensitive surfaces 220, or other sensor devices, gesture detector 324 analyzes the tracked motions, configurations, positions, and/or orientations of peripheral device 136 and/or objects (e.g., hands, arms, wrists, fingers, palms, thumbs) of the user to identify one or more gestures performed by user 110. More specifically, gesture detector 324 may analyze objects recognized within image data captured by image capture devices 138 of HMD 112 and/or sensors 90 and external cameras 102 to identify peripheral device 136 and/or a hand and/or arm of user 110, and track movements of the peripheral device 136, hand, and/or arm relative to HMD 112 to identify gestures performed by user 110. In some examples, gesture detector 324 may track movement, including changes to position and orientation, of the peripheral device 136, hand, digits, and/or arm based on the captured image data, and compare motion vectors of the objects to one or more entries in gesture library 330 to detect a gesture or combination of gestures performed by user 110. In some examples, gesture detector 324 may receive user inputs detected by presence-sensitive surface(s) of peripheral device and process the user inputs to detect one or more gestures performed by user 110 with respect to peripheral device 136.

Gesture detector 324 and gesture library 330 may be distributed, in whole or in part, to peripheral device 136 to process user inputs on peripheral device 136 to detect gestures. In such cases, presence-sensitive surface(s) 220 detects user inputs at locations of the surface. Peripheral device 136 executing gesture detector 324 can process the user inputs to detect one or more gestures of gesture library 330. Peripheral device 136 may send indications of the detected gestures to console 106 and/or HMD 112 to cause the console 106 and/or HMD 112 to responsively perform one or more actions. Peripheral device 136 may alternatively, or additionally, send indications of the user inputs at locations of the surface to console 106, and gesture detector 324 may process the user inputs to detect one or more gestures of gesture library 330.

Some entries in gesture library 330 may each define a gesture as a series or pattern of motion, such as a relative path or spatial translations and rotations of peripheral device 136, a user's hand, specific fingers, thumbs, wrists and/or arms. Some entries in gesture library 330 may each define a gesture as a configuration, position, and/or orientation of the peripheral device, user's hand and/or arms (or portions thereof) at a particular time, or over a period of time. Some entries in gesture library 330 may each define a gesture as one or more user inputs, over time, detected by presence-sensitive surface(s) 220 of peripheral device 136. Other examples of type of gestures are possible. In addition, each of the entries in gesture library 330 may specify, for the defined gesture or series of gestures, conditions that are required for the gesture or series of gestures to trigger an action, such as spatial relationships to a current field of view of HMD 112, spatial relationships to the particular region currently being observed by the user, as may be determined by real-time gaze tracking of the individual, a pose of peripheral device 136 within the current field of view of HMD 112, types of artificial content being displayed, types of applications being executed, and the like.

Each of the entries in gesture library 330 further may specify, for each of the defined gestures or combinations/series of gestures, a desired response or action to be performed by software applications 317. For example, in accordance with techniques of this disclosure, certain specialized gestures may be pre-defined such that, in response to detecting one of the pre-defined gestures, user interface engine 328 dynamically generates a user interface as an overlay to artificial reality content being displayed to the user, thereby allowing the user 110 to easily invoke a user interface for configuring HMD 112 and/or console 106 even while interacting with artificial reality content. In other examples, certain gestures may be associated with other actions, such as providing input, selecting virtual objects (including virtual content items and/or user interface elements), translating (e.g., moving, rotating) virtual objects, altering (e.g., scaling, annotating) virtual objects, making virtual markings, launching applications, and other actions.

As an example, gesture library 330 may include entries that describe a peripheral device gesture, such as user interface activation gesture, a menu scrolling gesture, a selection gesture, a stamping gesture, a translation gesture, rotation gesture, drawing gesture, and/or pointing gesture. Some of these gestures may also be performed using a virtual user interface. For example, a user may perform a drawing gesture with a peripheral device gesture (by manipulating poses of the peripheral device) or a user interface gesture (by interacting with a virtual user interface). Gesture detector 324 may process image data from image capture devices 138 to analyze configurations, positions, motions, and/or orientations of peripheral device 136 and/or a user's hand to identify a user interface gesture, selection gesture, stamping gesture, translation gesture, rotation gesture, drawing gesture, pointing gesture, etc. that may be performed by users with respect to peripheral device 136.

Gesture detector 324 may detect a user interface gesture performed by a user at a position corresponding to one of the virtual user interface elements of a virtual user interface generated by user interface engine 328. For example, rendering engine 322 may render the virtual user interface at a position in the artificial reality environment that corresponds to a position of peripheral device 136 in the physical environment. Rendering engine 322 renders user interface elements at positions within the virtual user interface that also correspond to positions of locations on the peripheral device 136. A gesture performed by a user at one of the positions of the virtual user interface elements is an indication of a gesture performed with respect to the virtual user interface element. For example, a user may perform a button press user interface gesture at a location on the peripheral device 136 that is encompassed by and overlaid by a virtual button in the artificial reality environment. In response to a detected user interface gesture that is performed by a user at a position corresponding to the virtual user interface element, the artificial reality system may perform one or more actions associated with the virtual user interface element.

Actions may include, for example, launching an application or performing some action within an application, modifying the virtual user interface, animating artificial reality content such as one of the user interface elements, closing an application, outputting artificial reality for display, configuring an application, modifying an application, or other action by console 106, HMD 112, or peripheral device 136.

The position corresponding to the virtual user interface element and at which the detected gesture was performed may be a location on a presence-sensitive surface 220. User interface engine 328 may store a mapping of locations on the presence-sensitive surface 220 to virtual user interface elements of a virtual user interface. In response to receiving an indication of a detected gesture at a location of the presence-sensitive surface 220, user interface engine 328 may map the location to the virtual user interface element. The artificial reality system may then perform one or more actions associated with the virtual user interface element.

In some examples, the position corresponding to the virtual user interface element and at which the detected gesture was performed may be a location on the peripheral device 136 that is not a presence-sensitive surface. User interface engine 328 may store a mapping of locations on peripheral device to virtual user interface elements of a virtual user interface. In response to receiving an indication of a detected gesture at a location of peripheral device 136, user interface engine 328 may map the location to the virtual user interface element. The artificial reality system may then perform one or more actions associated with the virtual user interface element.

In response to a detected gesture, user interface engine 328 may modify the virtual user interface. User interface engine 328 may drop down a selection list in response to a detected selection gesture, animate a button press in response to a button press gesture, generate markings at locations in the virtual user interface, and other user interface-type animations or modifications associated with user interfaces. Rendering engine 322 renders the modified virtual user interface at the appropriate user interface position, locked to peripheral device 136.

In the example shown in FIG. 3, peripheral device 136 includes one or more processors 346 and memory 344 that, in some examples, provide a computer platform for executing an operating system 342, which may be an embedded, real-time multitasking operating system, for instance, or other type of operating system. In turn, operating system 346 provides a multitasking operating environment for executing one or more software components. In some examples, peripheral device 136 includes one or more presence-sensitive surfaces 220 (e.g., one or more surfaces that use capacitive, conductive, resistive, acoustic, and/or other technology to detect touch and/or hover input). In one or more aspects, peripheral device 136 can be configured to detect touch and/or hover input at presence-sensitive surface 220, process that input (e.g., at processors 346) and communicate the touch and/or hover input and communicate information about that input (including location information about that input) to console 106 and/or HMD 112. As discussed with respect to the example of FIG. 2A, presence-sensitive surface(s) 220 can comprise a touchscreen (e.g., a capacitive touchscreen, resistive touchscreen, surface acoustic wave (SAW) touchscreen, infrared touchscreen, optical imaging touchscreen, acoustic pulse recognition touchscreen, or any other touchscreen). As further shown in FIG. 3, in this example, peripheral device 136 further includes one or more motion sensors 348, such as one or more accelerometers (also referred to as IMUs) that output data indicative of current acceleration of peripheral device 136, GPS sensors that output data indicative of a location or position of peripheral device, radar or sonar that output data indicative of distances of peripheral device 136 from various objects (e.g., from a wall or other surface), or other sensors that provide indications of a location, position, and/or orientation of peripheral device or other objects within a physical environment. In some examples, processors 346 are coupled to presence-sensitive surface(s) 220 and motion sensors 246. In some examples, processors 346 and memory 344 may be separate, discrete components. In other examples, memory 344 may be on-chip memory co-located with processors 346 within a single integrated circuit. In one or more aspects, peripheral device 136 can coexist with the HMD and, in some example, operate as an auxiliary input /output device for the HMD in the virtual environment. In some examples, the peripheral device 136 may operate as an artificial reality co-processing device to which some of the functions of the HMD 112 and/or console 106 are offloaded. In one or more aspects, peripheral device 136 can be a smartphone, tablet, or any other hand-held device.

In some examples, each of processors 302, 312, 346 may comprise any one or more of a multi-core processor, a controller, a digital signal processor (DSP), an application specific integrated circuit (ASIC), a field-programmable gate array (FPGA), or equivalent discrete or integrated logic circuitry. Memory 304, 314, 344 may comprise any form of memory for storing data and executable software instructions, such as random-access memory (RAM), read only memory (ROM), programmable read only memory (PROM), erasable programmable read only memory (EPROM), electronically erasable programmable read only memory (EEPROM), and flash memory.

If peripheral device 136 includes an output display, such as a presence-sensitive surface 220 that is a touchscreen, console 106 may send a communication to peripheral device 136 directing it to deactivate (i.e., turn off) the output display. Rendering engine 322 only renders virtual user interface 137 when the output display for the peripheral device 136 is deactivated.

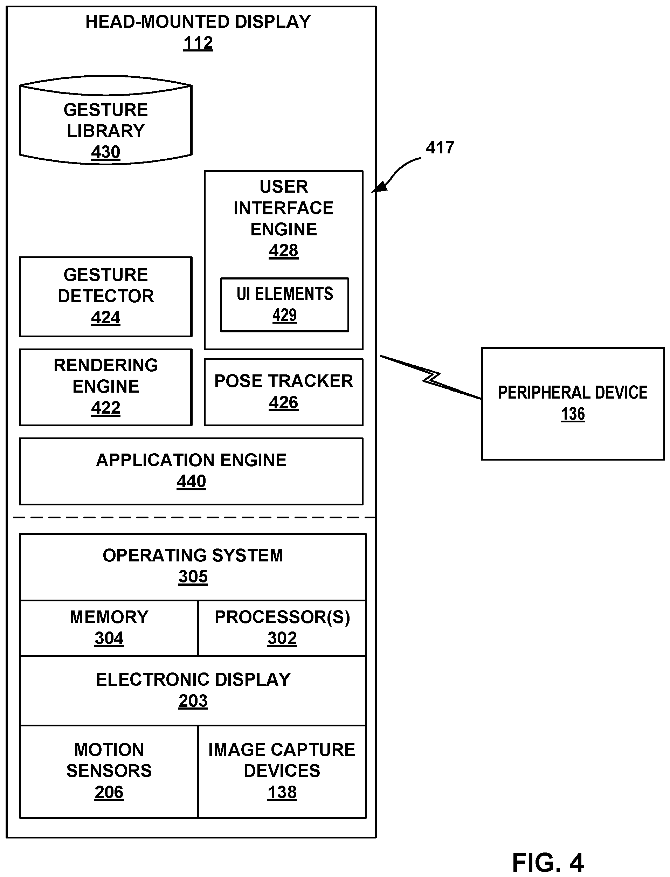

FIG. 4 is a block diagram depicting an example in which virtual user interface generation is performed by HMD 112 of the artificial reality systems of FIGS. 1A, 1B in accordance with techniques of the disclosure.

In this example, similar to FIG. 3, HMD 112 includes one or more processors 302 and memory 304 that, in some examples, provide a computer platform for executing an operating system 305, which may be an embedded, real-time multitasking operating system, for instance, or other type of operating system. In turn, operating system 305 provides a multitasking operating environment for executing one or more software components 417. Moreover, processor(s) 302 are coupled to electronic display 203, motion sensors 206, and image capture devices 138.

In the example of FIG. 4, software components 417 operate to provide an overall artificial reality application. In this example, software applications 417 include application engine 440, rendering engine 422, gesture detector 424, pose tracker 426, and user interface engine 428. In various examples, software components 417 operate similar to the counterpart components of console 106 of FIG. 3 (e.g., application engine 320, rendering engine 322, gesture detector 324, pose tracker 326, and user interface engine 328) to construct virtual user interfaces overlaid on, or as part of, the artificial content for display to user 110.

Similar to the examples described with respect to FIG. 3, user interface engine 428 is configured to generate virtual user interfaces for rendering in an artificial reality environment. User interface engine 428 generates a virtual user interface to include one or more virtual user interface elements 429, such as elements 142, 144, 146, and 148 described above with respect to FIG. 1A. Rendering engine 422 is configured to render, based on a current pose for peripheral device 136, the virtual user interface at a user interface position, in the artificial reality environment, that is locked relative to a position of peripheral device 136 in the artificial reality environment. The user interface position may be a position of one of presence-sensitive surfaces 220, and rendering engine 422 may scale, rotate, and otherwise transform the virtual user interface to apply perspective to match the pose, size, and perspective of the presence-sensitive surface 220 such that the virtual user interface appears, in the artificial reality environment, to be overlaid on the presence-sensitive surface 220. User interface engine 428 may generate virtual user interface to be partially transparent, allowing presence-sensitive surface 220 to be seen by the user. This degree of transparency may be configurable.

Similar to the examples described with respect to FIG. 3, based on the sensed data from any of the image capture devices 138 or 102, presence-sensitive surfaces of peripheral device 136, or other sensor devices, gesture detector 424 analyzes the tracked motions, configurations, positions, and/or orientations of peripheral device 136 and/or objects (e.g., hands, arms, wrists, fingers, palms, thumbs) of the user to identify one or more gestures performed by user 110. More specifically, gesture detector 424 may analyze objects recognized within image data captured by image capture devices 138 of HMD 112 and/or sensors 90 and external cameras 102 to identify peripheral device 136 and/or a hand and/or arm of user 110, and track movements of the peripheral device 136, hand, and/or arm relative to HMD 112 to identify gestures performed by user 110. In some examples, gesture detector 424 may track movement, including changes to position and orientation, of the peripheral device 136, hand, digits, and/or arm based on the captured image data, and compare motion vectors of the objects to one or more entries in gesture library 430 to detect a gesture or combination of gestures performed by user 110. In some examples, gesture detector 424 may receive user inputs detected by presence-sensitive surface(s) of peripheral device and process the user inputs to detect one or more gestures performed by user 110 with respect to peripheral device 136.

Gesture detector 424 may track movement, including changes to position and orientation, of the peripheral device, hand (including digits), and/or arm based on the captured image data, and compare motion vectors of the objects to one or more entries in gesture library 430 to detect a gesture or combination of gestures performed by user 110. Gesture library 430 is similar to gesture library 330 of FIG. 3. Some of all of the functionality of gesture detector 424 may be executed by peripheral device 136.

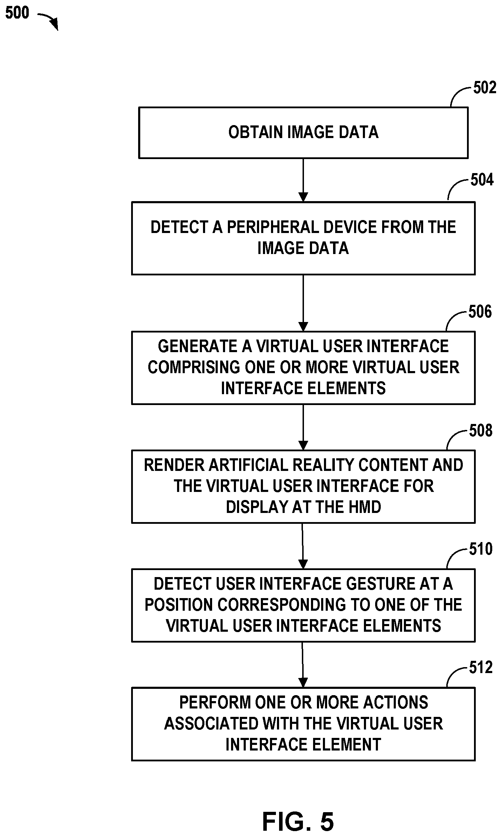

FIG. 5 is flowchart illustrating an example mode of operation for an artificial reality system, in accordance with one or more aspects of techniques of this disclosure. Operations of mode of operation 500 is described in this example with respect to artificial reality system 10 but may be performed by one or more components of any artificial reality system described herein, such as artificial reality systems 10, 20 of FIGS. 1A, 1B. For instance, some or all of the operations may be performed by one or more of pose tracker (326, 426 of FIGS. 3 and 4), gesture detector (324, 424 of FIGS. 3 and 4), a user interface engine (328, 428 of FIGS. 3 and 4), and a rendering engine (322, 422 of FIGS. 3 and 4).

Artificial reality system 10 obtains image data from one or more image capture devices (502) and processes the image data to detect a peripheral device 136 in a field of view of HMD 112 (504). Artificial reality system 10 generates a virtual user interface 137 having one or more virtual user interface elements (506). Artificial reality system 10 renders the virtual user interface 137, at a user interface position locked relative to a position of the peripheral device 136 in an artificial reality environment, virtual user interface 137 for display at HMD 112 (508). Artificial reality system 10 may also render the peripheral device, or a representation thereof (e.g., a peripheral device avatar), with the virtual user interface 137 rendered as overlaid on the rendered peripheral device representation.

Artificial reality system 10 detects a user interface gesture at a position in the artificial reality environment that corresponds to one of the virtual user interface elements (510). In response to the user interface gesture, artificial reality system 10 performs one or more actions associated with the virtual user interface element.

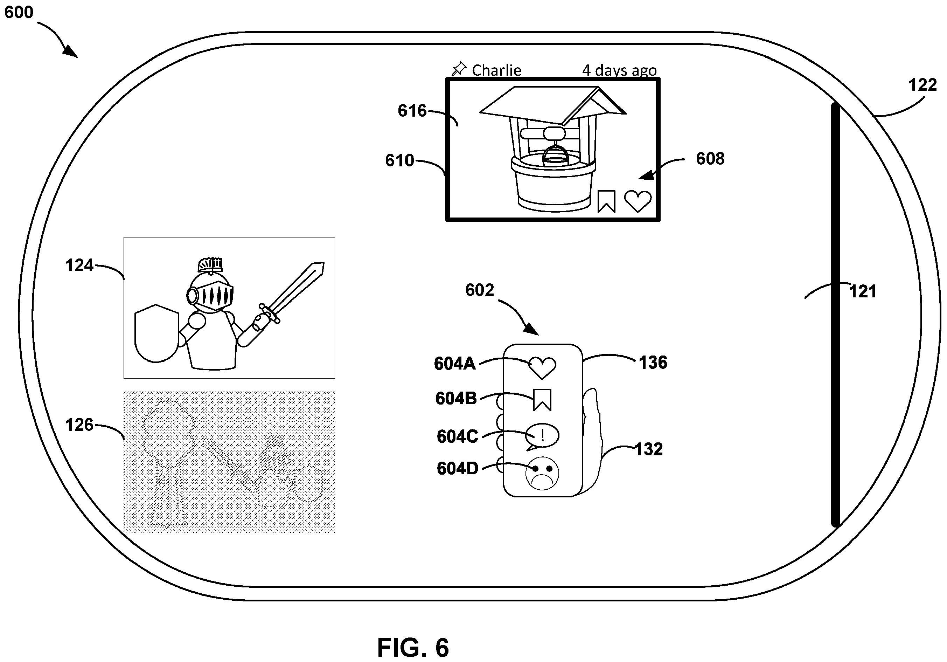

FIG. 6 is an example HMD display 600 illustrating interacting with artificial reality content in accordance with aspects of the disclosure. In the illustrated example of FIG. 6, a rendering engine of the HMD may render a virtual user interface 602 overlaid on the surface of peripheral device 136 for display at the HMD. In the example illustrated in FIG. 6, the artificial reality system generates and renders virtual user interface 602 while virtual content item 616 is active. In one or more aspects, virtual user interface 602 includes one or more virtual elements 604A-604D (collectively, "virtual elements 604") to annotate active virtual content item 616. A user may perform a user interface gesture at a position corresponding to one or more of the virtual elements 604 rendered on the peripheral device 136. In one or more aspects, an annotation gesture comprises hand 132 (or one or more fingers of hand 132) selecting (e.g., virtually touching or pressing) one of elements 604A-604D. For example, a user can annotate active virtual content item 616 by selecting an "emoji" (e.g., any of elements 604A, 604B) that indicates a user's reaction to the virtual content item.

The HMD detects the user interface gesture performed by a user at a position corresponding to the rendered virtual elements 604. In one or more aspects, the touch gestures performed on the surface of peripheral device 136 can be detected from image data captured by an image capture device of the artificial reality system, as noted above. In one or more aspects, the surface of peripheral device 136 is a presence-sensitive surface at which the peripheral device 136 detects the touch gestures, as noted above.

In response to detecting a user interface gesture selecting or touching element 604A, the artificial reality system will perform one or more actions, such as annotate active virtual content item 616 to indicate that the user "loves" or "likes" virtual content item 616. In some examples, the "love" or "like" annotation will be reflected on virtual content item 616 (e.g., element 608 will be generated over virtual content item 616 as shown in FIG. 6) or in proximity to (e.g., adjacent to) virtual content item 616. In another example, a user can annotate active virtual content item 616 by commenting on the virtual content item. For example, a user can select element 604C and the artificial reality system can, in response to detecting the selection gesture of element 604C, generate and render a virtual keyboard for the user to enter a comment about active virtual content item 616. In one or more aspects, the entered comment will be reflected over virtual content item 616 or in proximity to (e.g., adjacent to) virtual content item 616. In one or more aspects, virtual user interface 602 is rendered for display at the HMD (e.g., virtual user interface 602 is overlaid on a surface of peripheral device 136 by the HMD as shown in FIG. 6). In one or more aspects, virtual user interface 602 is rendered for display by peripheral device 136 (e.g., at a display or touchscreen of peripheral device 136). In one or more aspect, the artificial reality system may not render any representation of the peripheral device 136. In one or more aspects, an active virtual content item can include an active indicator 610 (e.g., a border, highlighting, a shadow, and/or any other indication that a user can manipulate or otherwise interact with a particular virtual content item) to indicate that the user can annotate that virtual content item.

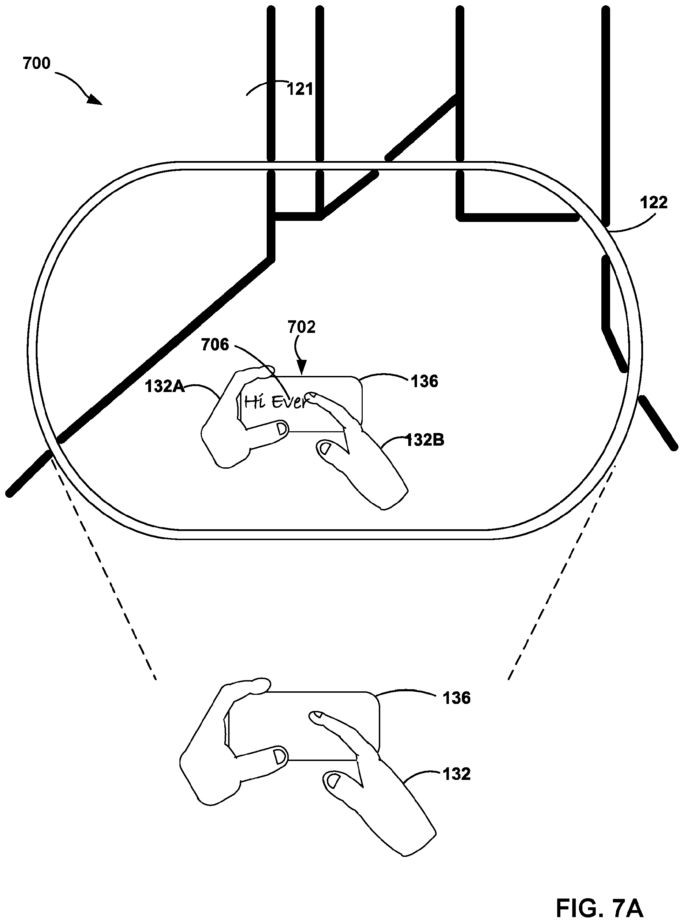

FIG. 7A is an example HMD display 700 illustrating a virtual drawing surface mode in accordance with aspects of the disclosure. In the example illustrated in FIG. 7A, a rendering engine of the artificial reality system may render a virtual user interface 702 overlaid on the surface of peripheral device 136 for display at the HMD. In this example, the virtual user interface 702 may include a virtual drawing interface or textual input interface to interact or otherwise engage with artificial reality content (e.g., artificial reality content 122) outputted by the HMD. In this example, a user is interacting with (e.g., performing touch user interface gestures on) a peripheral device 136 with the index finger of hand 132B. In one or more aspects, the touch user interface gestures performed on the surface of peripheral device 136 can be detected from image data captured by an image capture device of the artificial reality system, as noted above. In one or more aspects, the surface of peripheral device 136 is a presence-sensitive surface at which the peripheral device 136 detects the touch user interface gestures, as noted above. In this example, the artificial reality system detects a touch user interface gesture (e.g., in this case a drawing gesture) performed by a user at positions corresponding to the virtual drawing interface. For example, a user may interact with peripheral device 136 by pressing the index finger of hand 132B on a position of the virtual user interface 702, drag the finger to a different position of the virtual user interface 702, and release the finger.

In response to detecting the user input (e.g., the drawing gestures) at the surface of peripheral device 136, the artificial reality system generates a modified virtual user interface comprising virtual marks 706 for display at the HMD at the locations of the surface of peripheral device 136 where the drawing gestures were performed, as illustrated in artificial content 122 of FIG. 7A. For example, the artificial reality system generates and renders virtual marks 706 at the positions where the user pressed the index finger on the initial position of the virtual user interface 702 and was dragged to a different position of the virtual user interface 702.

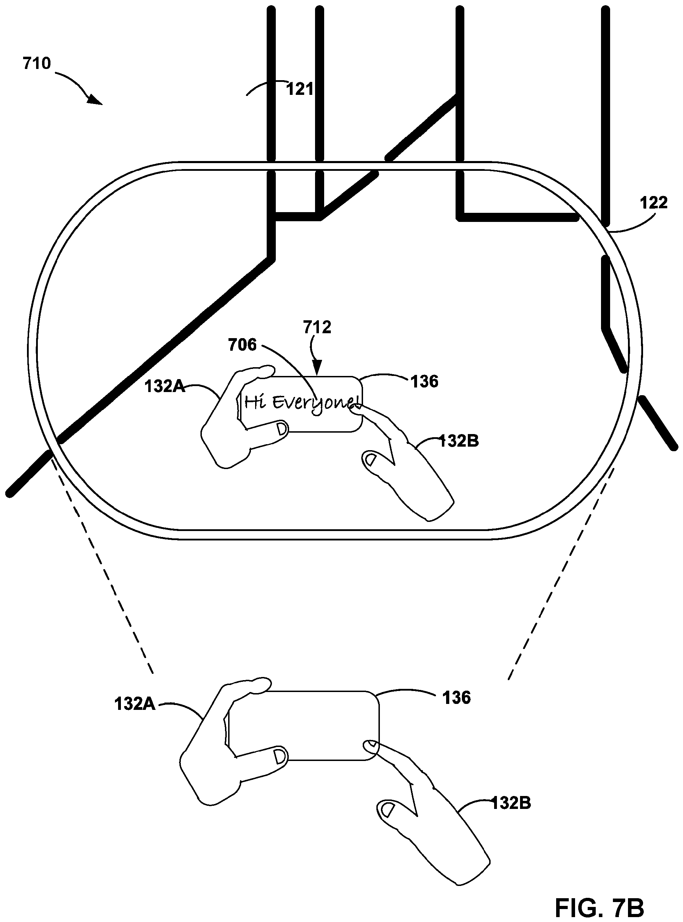

As shown in FIG. 7A, virtual markings 706 do not exist outside of artificial reality content 122 (e.g., cannot be seen without an HMD), and are rendered at a user interface position locked relative to a position of peripheral device 136 in the artificial reality environment. In one or more aspects, virtual markings 706 are generated and rendered as the touch input is detected. For example, FIG. 7B illustrates HMD display 710 at a later time than shown in FIG. 7A. In this example, the user has completed the phrase "Hi Everyone!" with touch gestures on the surface of peripheral device 136 as shown in artificial reality content 122 of FIG. 7B. The artificial reality system generates a modified virtual user interface 712 and renders the modified virtual user interface 712 at the appropriate user interface position and pose locked to the current position and pose of peripheral device 136.

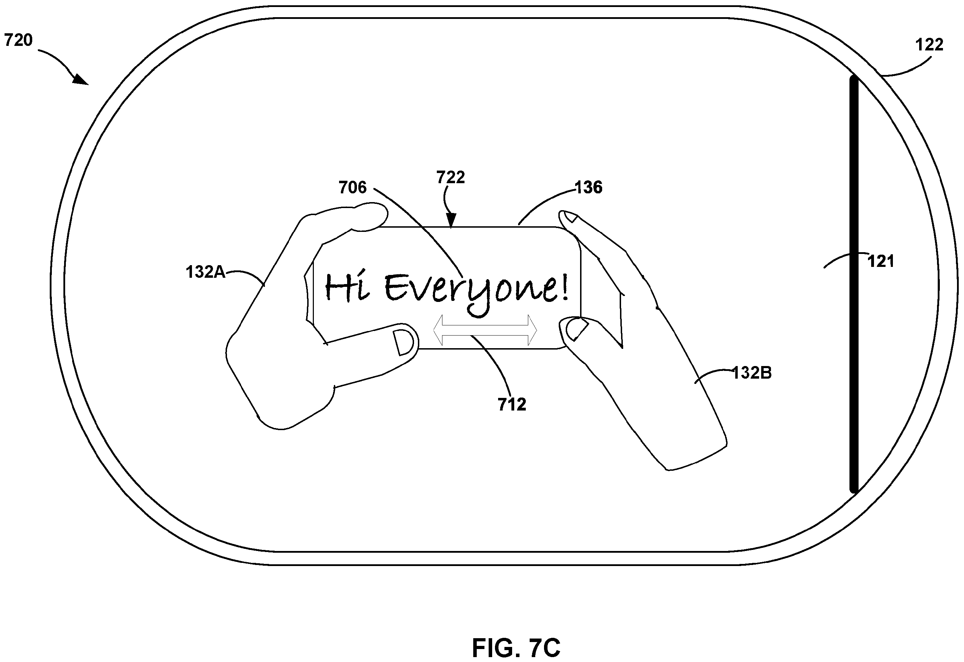

FIG. 7C is an example HMD display 720 illustrating a virtual drawing surface mode for performing various manipulations to the artificial content on peripheral device 136, in accordance with aspects of the disclosure. In the illustrated example of FIG. 7C, the artificial reality system may, based on user interface gestures corresponding to various manipulations to the artificial reality content using peripheral device 136, render a modified virtual user interface 722 overlaid on the surface of peripheral device 136 for display at the HMD. In this example, the artificial reality system may generate and render a modified virtual user interface 722 comprising manipulated virtual markings (e.g., scaled, translated or rotated virtual markings).

For example, a user may perform user interface gestures with respect to peripheral device 136 to perform various manipulations with respect to the virtual markings using peripheral device 136. The user may perform touch user interface gestures, such as a pinch-to-zoom gesture to expand or shrink the virtual markings rendered on peripheral device 136. For example, the user may press a thumb of hand 132A and a thumb of hand 132B at two positions on the virtual user interface 722 and may "pinch" the fingers closer together (to zoom out or shrink the markings or other virtual user interface elements) or "spread" the fingers further apart (to zoom in or enlarge the markings or other virtual user interface elements). The user may perform other user interface gestures to manipulate the virtual markings on peripheral device 136, such as rotating the virtual markings (e.g., placing two fingers on the virtual user interface 722 and rotating the placement of the fingers) or moving the virtual markings (e.g., placing two fingers of the virtual user interface 722 and sliding the two fingers in one direction). In other examples (not shown), the user may also perform the various manipulations to the virtual user interface as a whole or other virtual user interface elements.

In one or more aspects, the touch gestures performed on the surface of peripheral device 136 can be detected from image data captured by an image capture device of the artificial reality system, as noted above. In one or more aspects, the surface of peripheral device 136 is a presence-sensitive surface at which the peripheral device 136 detects the touch gestures, as noted above.

In response to detecting the user input (e.g., the user interface gesture), the artificial reality system may perform one or more actions such as generate a modified virtual user interface comprising modified virtual markings (e.g., enlarged virtual markings) based on the user input.

Virtual markings 706 do not exist outside of artificial reality content 122 (e.g., cannot be seen without an HMD), and are rendered at a user interface position locked relative to a position of peripheral device 136 in the artificial reality environment. In one or more aspects, virtual markings 706 are generated and rendered as the touch input is detected. For example, the virtual markings 706 may be enlarged as the thumbs of hands 132A and 132B, respectively, are spread apart.

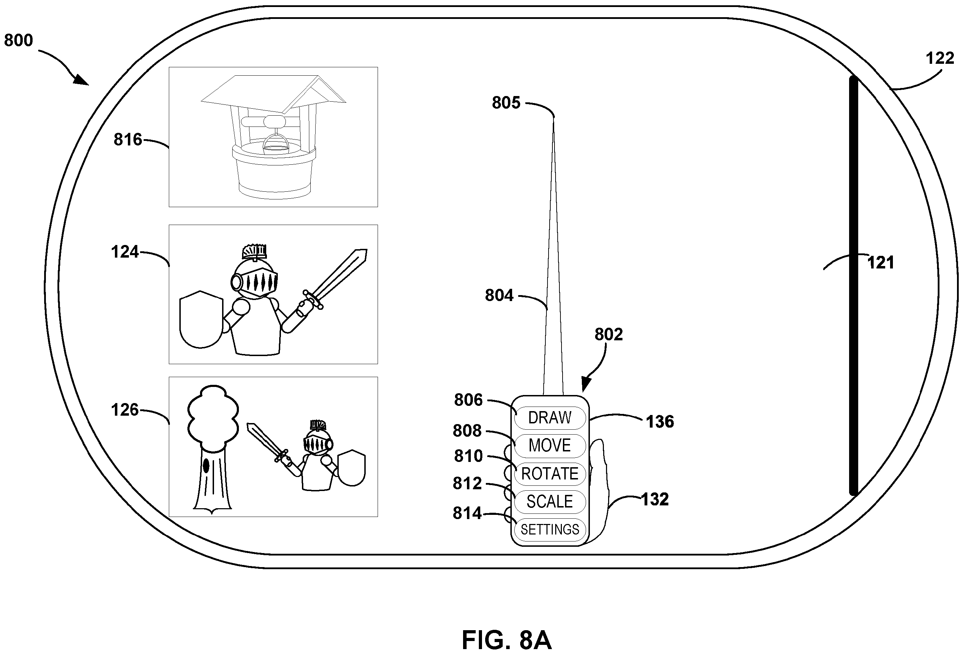

FIG. 8A is an example HMD display 800 illustrating a virtual user interface 802 and virtual pointer 804, in accordance with aspects of the disclosure. In the example illustrated in FIG. 8A, a rendering engine of the artificial reality system may render a virtual user interface 802 overlaid on the surface of peripheral device 136 and virtual pointer 804 for display at the HMD. For example, artificial reality content 122 includes virtual pointer 804 along a line between peripheral device 136 to location 805 on a virtual surface corresponding to a physical wall 121. In one or more aspects, the virtual pointer 805 may represent a solid line, but may represent any kind of line, such as a line broken up into one or more portions of the same or different lengths. In one or more aspects, the virtual pointer 804 need not be straight and may be in freeform with at least a point at the end. In the examples illustrated in FIG. 8A, the virtual surface also includes artificial reality content items 816, 124, and 126.

In one or more aspects, artificial reality content items can comprise GIFs, photos, applications, live-streams, videos, text, a web-browser, drawings, animations, representations of data files, or any other visible media. In one or more aspects, the artificial reality system generates and renders a virtual user interface 802 with a virtual pointer 805 overlaid on a surface of peripheral device 136 for display at the HMD. In one or more aspects, virtual user interface 802 includes virtual elements, such as a draw element 806, move element 808, rotate element 810, scale element 812, and/or a settings element 814. In one or more aspects, virtual user interface 802 can include other combination of user interface elements. In one or more aspects, virtual user interface 802 is rendered for display at the HMD (e.g., virtual user interface 802 is overlaid on a surface of peripheral device 136 by the artificial reality system as shown in FIG. 8A).

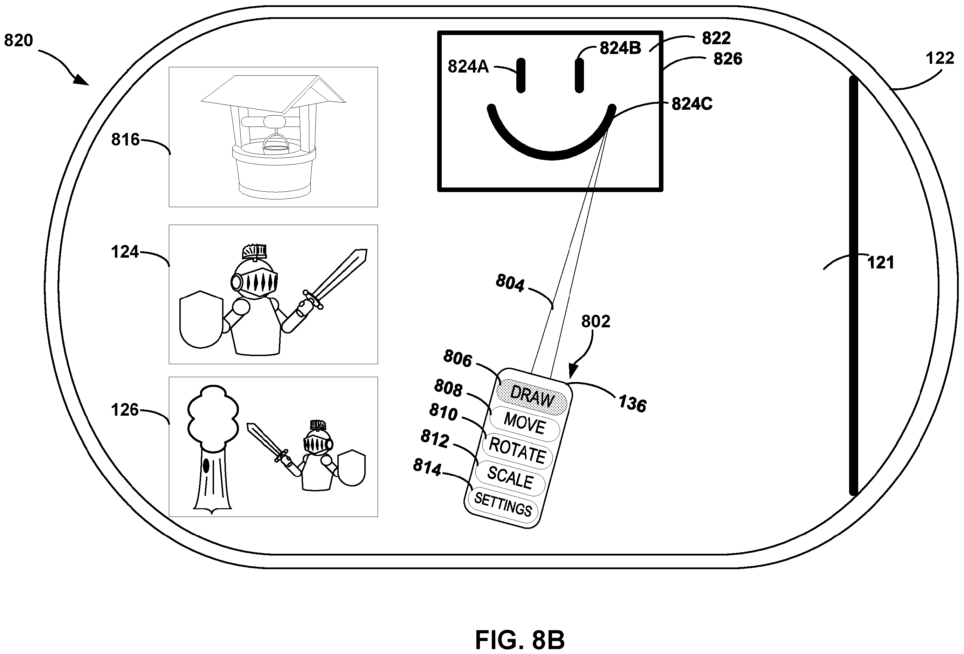

FIG. 8B is an example HMD display 820 illustrating pointer drawing gesture in accordance with aspects of the disclosure. In the example illustrated in FIG. 8B, a rendering engine of the HMD may render a virtual user interface 802 overlaid on the surface of peripheral device 136 for display at the HMD. In this example, a user is interacting with a virtual drawing surface 822 (e.g., by performing one or more drawing gestures) with the peripheral device 136 while selecting draw element 806. In one or more aspects, the one or more drawing gestures performed with peripheral device 136 can detected from image data captured by an image capture device of the artificial reality system, as noted above. In response to detecting the one or more drawing gestures with peripheral device 136, the artificial reality system generates and renders virtual markings 824A-824C for display at the HMD at the locations of pointer 804 on virtual drawing surface 822 while the user selected draw element 806. In the example shown in FIG. 8B, the user performed a vertical drawing gesture with peripheral device 136 while selecting draw element 806 to render marking 824A, next the user performed a second vertical drawing gesture peripheral device 136 while selecting draw element 806 to render marking 824B, and then the user performed a third drawing gesture peripheral device 136 while selecting draw element 806 to render marking 824C. In one or more aspects, the user may select draw element 806 and draw an image via a virtual drawing interface (e.g., as previously described in FIG. 7A) to be projected within the virtual drawing surface 822. In one or more aspects, the user did not select draw element 806 in between performing the first, second and third drawing gestures. In one or more aspects, virtual drawing surface can include border 826. In one or more aspects, virtual drawing surface 822 is associated with a planar surface (e.g., wall 121). Selecting draw element 806 may include performing a hold gesture, maintaining continual contact with the location on peripheral device 136 corresponding to draw element 806, while performing a drawing gesture. In one or more aspects, virtual drawing surface can correspond to an entire physical surface (e.g., have the same surface area as the physical surface) or correspond to a portion of a physical surface (e.g., as shown in FIG. 8B). In some examples, a virtual drawing surface can be rendered as floating in a virtual or real-world physical environment (e.g., not associated with a particular real-world surface) (not shown).

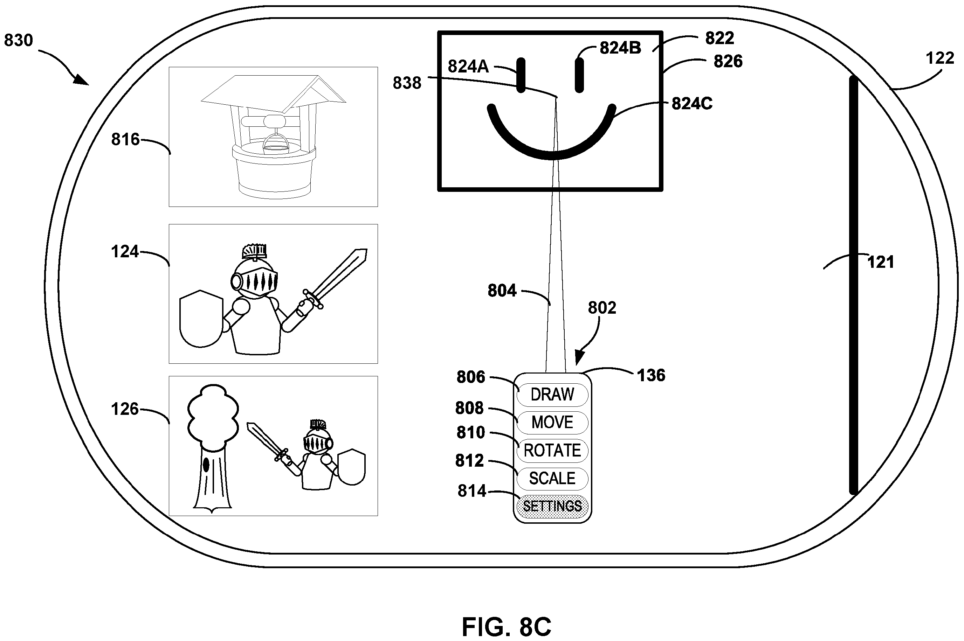

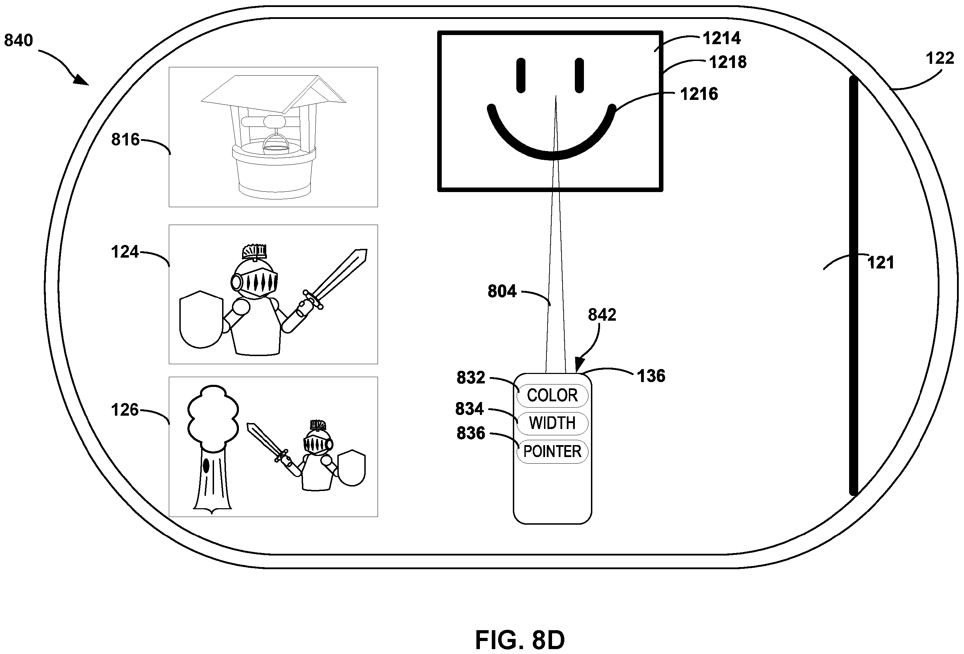

FIGS. 8C-8D illustrate HMD displays 830-840, respectively, illustrating virtual user interfaces that allow a user to alter virtual pointer 804 in accordance with aspects of the disclosure. In response to detecting the selecting settings element 814 of virtual user interface 802 (e.g., as illustrated in FIG. 8C), the artificial reality system generates and renders a modified virtual user interface 842 on a surface of peripheral device 136 (e.g., as illustrated in FIG. 8D), such as the virtual user interface illustrated in FIG. 8D. In the example illustrated in FIG. 8D, the virtual user interface 802 including settings elements includes a color element 832, width element 834, and pointer element 836. In one or more aspects, the virtual user interface 842 can include other combination of virtual user interface elements. In one or more aspects, virtual user interface 842 is rendered for display at the HMD (e.g., virtual user interface 842 is projected on a surface of peripheral device 136 by the HMD as shown in FIG. 12D). In one or more aspects, virtual user interface 842 is rendered for display by peripheral device 136 (e.g., at a display or touchscreen of peripheral device 136). In one or more aspects, the artificial reality system changes the color of virtual pointer 804 in response to detecting a selection of color element 832 (e.g., the artificial reality system will toggle the rendered color of virtual pointer 804). In one or more aspects, changing the color of virtual pointer 804 will change the color of any future rendered virtual markings with virtual pointer 804. In one or more aspects, the artificial reality system changes the color of virtual markings 824A-824C in response to detecting a selection of color element 832 while the location 838 of virtual pointer 804 is on virtual drawing surface 822. In one or more aspects, the artificial reality system changes the color of any of virtual markings 824A-824C in response to detecting a selection of color element 832 while the location 838 of virtual pointer 804 is on any of virtual markings 824A-824C. In one or more aspects, the artificial reality system changes the width of virtual pointer 804 in response to detecting a selection of width element 834 (e.g., the artificial reality system will toggle the rendered width of virtual pointer 804). In one or more aspects, changing the width of virtual pointer 804 will change the width of any future rendered virtual markings with virtual pointer 804. In one or more aspects, the artificial reality system changes the width of virtual markings 824A-824C in response to detecting a selection of width element 834 while the location 838 of virtual pointer 804 is on virtual drawing surface 822. In one or more aspects, the artificial reality system changes the width of any of virtual markings 824A-824C in response to detecting a selection of width element 834 while the location 838 of virtual pointer 804 is on any of virtual markings 824A-824C. In one or more aspects, the artificial reality system changes other characteristics of virtual pointer 804 in response to detecting a selection of pointer element 836. In some examples, the other characteristics include the shape of virtual pointer 804 (e.g., cone, tube, line), whether virtual pointer 804 includes a pattern (e.g., whether only one or more portions of the virtual pointer are rendered, the opaqueness of the virtual pointer 804 (e.g., whether or how transparent the beam is), the brightness of virtual pointer 804, and/or any other visual characteristic of virtual pointer 804.

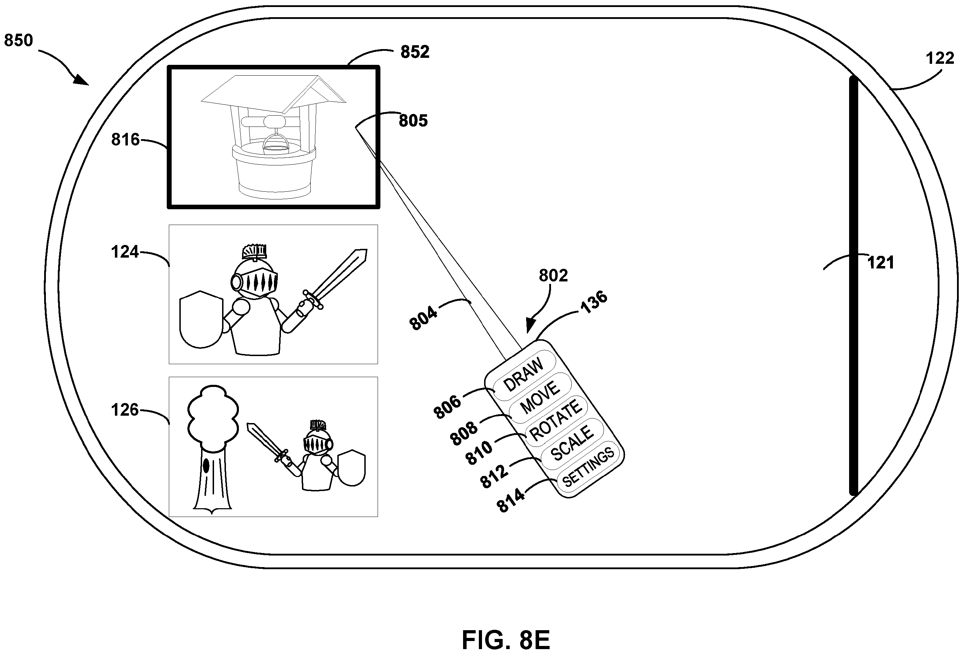

FIG. 8E is an example HMD display 850 illustrating a user selecting artificial reality content item 816 with virtual pointer 804 in accordance with aspects of the disclosure. In the example illustrated in FIG. 8E, the artificial reality system selects artificial reality content item 816 (e.g., sets the status of artificial reality content item 816 to active) in response to location 805 of virtual pointer 804 being detected on artificial reality content item. In one or more aspects, an active artificial reality content item can include an active indicator 852 (e.g., a border, highlighting, a shadow, and/or any other indication that a user can manipulate or otherwise interact with a particular virtual drawing). In one or more aspects, the user can modify virtual 812 while it is selected, as described in further detail below.

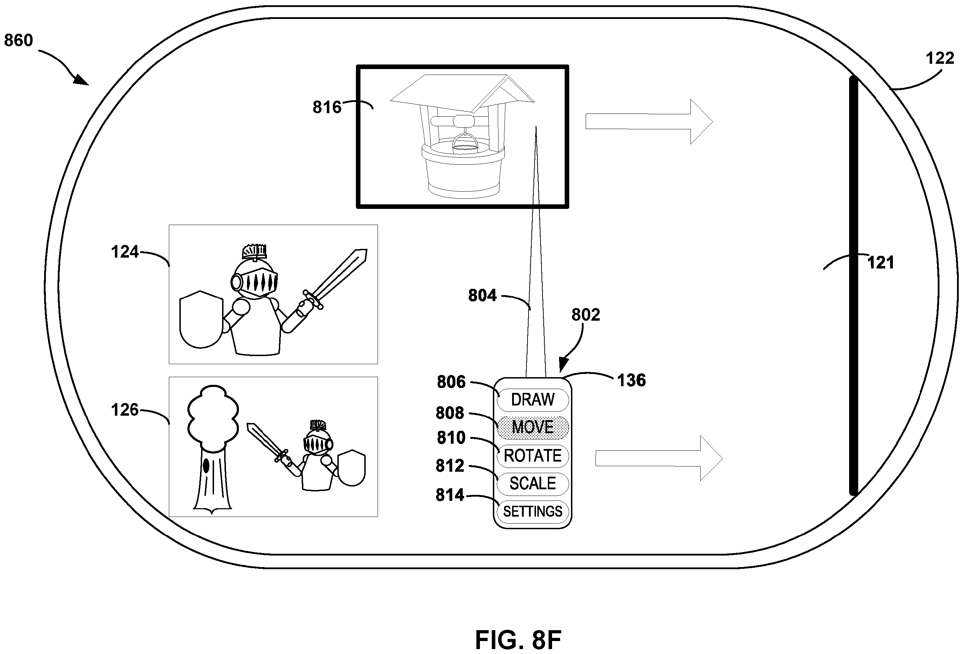

FIG. 8F is an example HMD display 860 illustrating a transformation gesture while selecting move selecting move element 808 in accordance with aspects of the disclosure. In the example illustrated in FIG. 8F, the user is moving peripheral device 136 horizontally toward the right (e.g., performing a horizontal translation gesture) and or rotating peripherical device from left to right while artificial reality content item 816 is active. In response to detecting the translation gesture while selecting move element 808, the artificial reality system translates artificial reality content item 816 in accordance with the translation gesture performed with respect to peripheral device 136 (e.g., moves artificial reality content item 816 to the right as shown in FIG. 8F). For example, a user may press and hold the move element 808, move the peripheral device 136 or virtual pointer 804 to move the artificial reality content 816, and release the move element 808 to stop moving the artificial reality content 816. In some examples, a user may make a first press on the move element 808, move the peripheral device 136 or virtual pointer 804 to move the artificial reality content 816, and make a second press on the move element 808 to stop moving the artificial reality content 816. In one or more aspects, the user can translate (e.g., move) peripheral device 136 in other directions (e.g., in a vertical direction), which would cause the artificial reality system to move artificial reality content item 816 in accordance with that motion. In one or more aspects, artificial reality content item 816 is moved in the same direction and for the same distance as peripheral device 136. For example, if peripheral device 136 is moved to the left three inches, artificial reality system will move artificial reality content item 816 to the left three inches. In one or more aspects, artificial reality content item 816 is moved in substantially the same direction (e.g., within 10 degrees) and for substantially the same distance (e.g., within inches) as peripheral device 136. In one or more aspects, the artificial reality system will move artificial reality content item 816 a magnitude distance corresponding to the distance that the peripheral device 136 is moved (e.g., 50%, 150%, 200% or any percentage of the distance the peripheral device 136 is moved).

In some examples, the rendering engine of the artificial reality system may render a directional pad to control the movement of a selected artificial reality content. For example, a user may select move element 806, select an image via the virtual pointer 804, and perform an interface gesture on the directional pad to move artificial reality content 816.

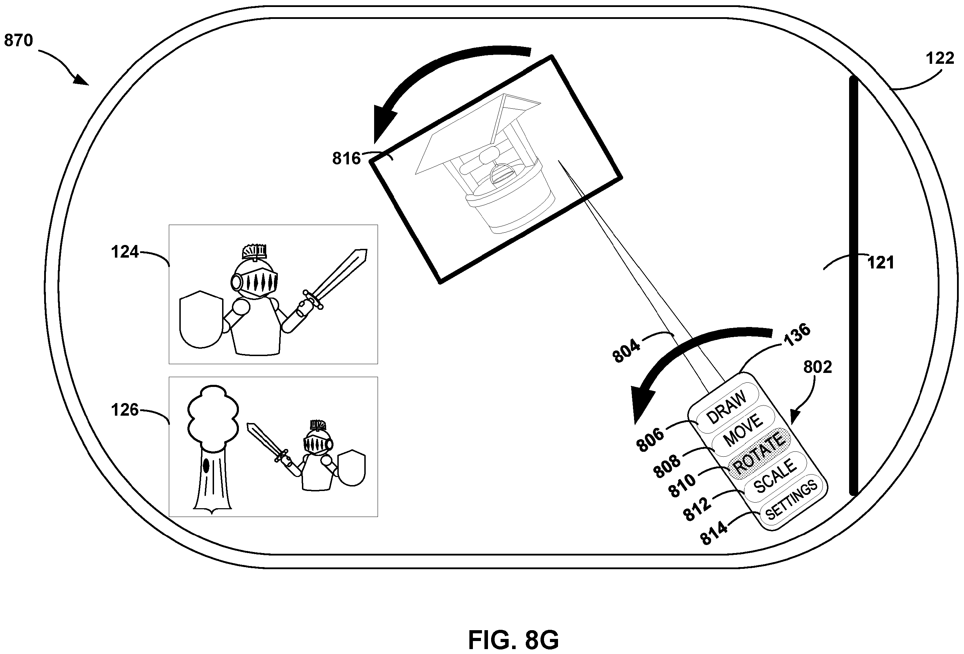

FIG. 8G is an example HMD display 870 illustrating a transformation gesture in accordance with aspects of the disclosure. In the example illustrated in FIG. 8G, the user rotates peripheral device 136 counterclockwise while artificial reality content item 816 is active and while the user is selecting rotate element 810. In response to detecting the rotation gesture while selecting rotate element 810, the artificial reality system rotates artificial reality content item 816 in accordance with the translation gesture performed with respect to peripheral device 136 (e.g., rotates artificial reality content item 816 as shown in FIG. 8G). For example, a user may press and hold the rotate element 810, rotate the peripheral device 136 or virtual pointer 804 to rotate the artificial reality content 816, and release the rotate element 810 to stop rotating the artificial reality content 816. In some examples, a user may make a first press on the rotate element 810, rotate the peripheral device 136 or virtual pointer 804 to rotate the artificial reality content 816, and make a second press on the rotate element 810 to stop rotating the artificial reality content 816. In some examples, the rendering engine of the artificial reality system may generate a modified virtual user interface comprising a modified virtual user interface element including a virtual directional pad to control the rotation. In one or more aspects, the user can rotate peripheral device 136 in other directions (e.g., in a clockwise direction), which would cause the artificial reality system to rotate artificial reality content item 816 in accordance with that direction. In one or more aspects, artificial reality content item 816 is rotated in the same direction and for the same degrees as peripheral device 136. For example, if peripheral device 136 is moved to the counterclockwise fifteen degrees, artificial reality system will rotate artificial reality content item 816 counterclockwise fifteen degrees. In one or more aspects, artificial reality content item 816 is rotated for substantially the same degrees (e.g., within ten degrees) as peripheral device 136. In one or more aspects, the artificial reality system will rotate artificial reality content item 816 a magnitude corresponding to the degrees that the peripheral device 136 is rotated (e.g., 50%, 150%, 200% or any percentage of the degrees the peripheral device 136 is rotated).

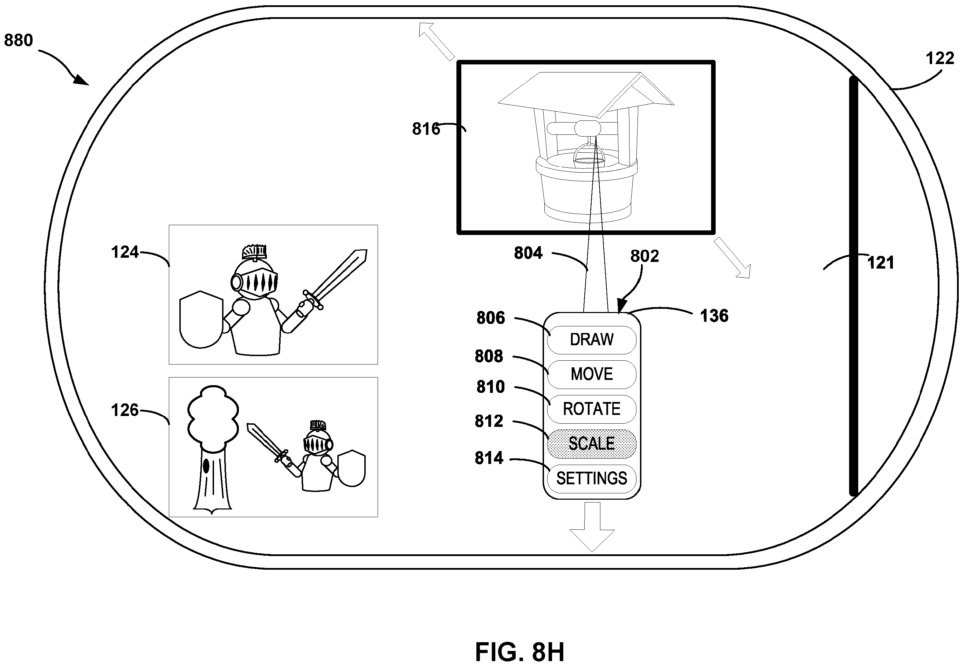

FIG. 8H is an example HMD display 880 illustrating a transformation gesture in accordance with aspects of the disclosure. In the example illustrated in FIG. 8H, the user moves peripheral device 136 away from the virtual surface corresponding to wall 121 while artificial reality content item 816 is active and while the user is selecting scale element 812. In response to detecting a translation gesture toward or away a plane in physical space (e.g., wall 121) while selecting scale element 812, the artificial reality system scales artificial reality content item 816 in accordance with the translation gesture performed with respect to peripheral device 136. In the example illustrated in FIG. 8H, the artificial reality system increases the size of artificial reality content item 816 in response to the peripheral device 136 being moved away from the virtual surface corresponding to wall 121. In other examples, the artificial reality system reduces the size of artificial reality content item 816 in response to the user moving peripheral device 136 toward the virtual surface corresponding to wall 121. In one or more aspects, the size of artificial reality content item 816 is scaled in accordance with the distance peripheral device 136 to the virtual surface corresponding to wall 121, with an effect similar to projection.

In some examples, a user may press and hold the scale element 812, move the peripheral device 136 or virtual pointer 804 to scale the artificial reality content 816, and release the scale element 812 to stop scaling the artificial reality content 816. In some examples, a user may make a first press on the scale element 812, move the peripheral device 136 or virtual pointer 804 to scale the artificial reality content 816, and make a second press on the scale element 812 to stop rotating the artificial reality content 816. In some examples, the rendering engine of the artificial reality system may generate a modified virtual user interface comprising a modified virtual user interface element including a virtual directional pad to control the scaling.

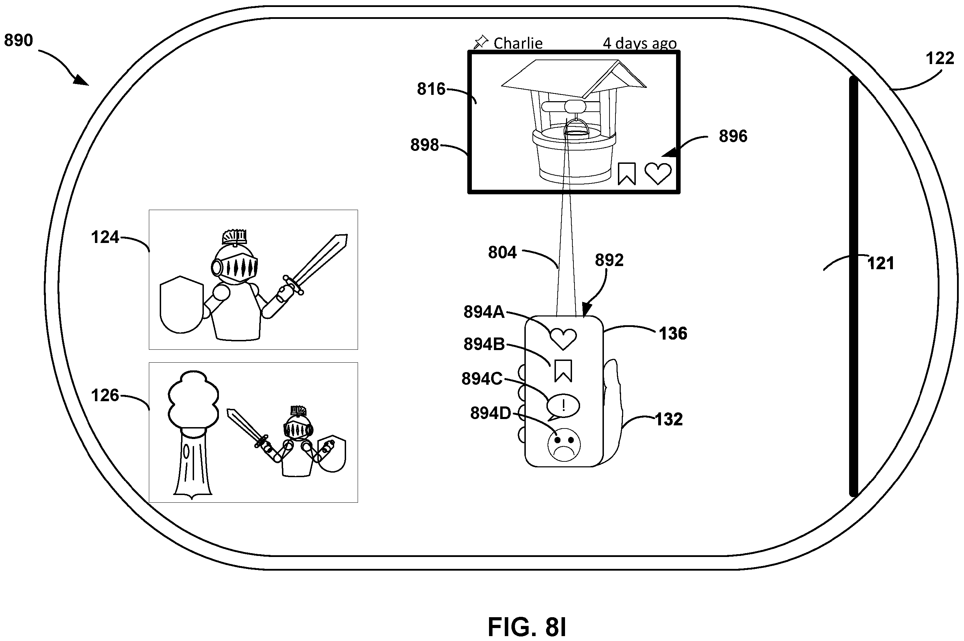

FIG. 8I is an example HMD display 890 illustrating a user interacting with artificial reality content item 816 with virtual pointer 804 in accordance with aspects of the disclosure. In the illustrated example of FIG. 8I, a rendering engine of the HMD may render a virtual user interface 892 overlaid on the surface of peripheral device 136 for display at the HMD. In the example illustrated in FIG. 8I, the artificial reality system generates and renders virtual user interface 892 with virtual pointer 804. In one or more aspects, virtual user interface 892 includes one or more virtual elements 894A-894D (collectively, "virtual elements 894") to annotate active artificial reality content item 616. A user may use the virtual pointer 804 to select the artificial reality content, e.g., artificial reality content 816, for which to annotate. In response to selecting artificial reality content 816, a user may perform an interface gesture at a position corresponding to one or more of the virtual elements 894 rendered on the peripheral device 136. In one or more aspects, an annotation gesture comprises hand 132 (or one or more fingers of hand 132) selecting (e.g., touching) one of elements 894A-894D. For example, a user can annotate active virtual content item 616 by selecting an "emoji" (e.g., any of elements 894A, 894B) that indicates a user's reaction to the virtual content item.

The HMD detects the interface gesture performed by a user at a position corresponding to the rendered virtual elements 894. In one or more aspects, the touch gestures performed on the surface of peripheral device 136 can be detected from image data captured by an image capture device of the artificial reality system, as noted above. In one or more aspects, the surface of peripheral device 136 is a presence-sensitive surface at which the peripheral device 136 detects the touch gestures, as noted above.

In response to detecting a gesture selecting or touching element 894A, the artificial reality system will perform one or more actions, such as annotate active virtual content item 816 to indicate that the user "loves" or "likes" virtual content item 816. In some examples, the "love" or "like" annotation will be reflected on virtual content item 816 (e.g., element 896 will be generated over virtual content item 816 as shown in FIG. 8I) or in proximity to (e.g., adjacent to) virtual content item 816. In another example, a user can annotate active virtual content item 816 by commenting on the virtual content item. For example, a user can select element 894C and the artificial reality system can, in response to detecting the selection gesture of element 894C, generate and render a virtual keyboard for the user to enter a comment about active virtual content item 816. In one or more aspects, the entered comment will be reflected over virtual content item 816 or in proximity to (e.g., adjacent to) virtual content item 816. In one or more aspects, virtual user interface 892 is rendered for display at the HMD (e.g., virtual user interface 892 is overlaid or projected on a surface of peripheral device 136 by the artificial reality system as shown in FIG. 8I). In one or more aspects, virtual user interface 892 is rendered for display by peripheral device 136 (e.g., at a display or touchscreen of peripheral device 136). In one or more aspects, an active virtual content item can include an active indicator 898 (e.g., a border, highlighting, a shadow, and/or any other indication that a user can manipulate or otherwise interact with a particular virtual content item) to indicate that the user can annotate that virtual content item.

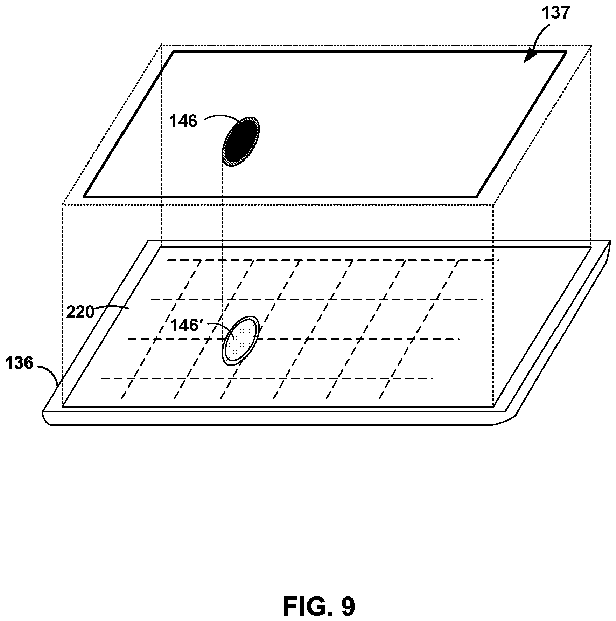

FIG. 9 is a block diagram illustrating an example peripheral device and virtual user interface, according to techniques of this disclosure. FIG. 9 illustrates virtual user interface 137, having a virtual user interface element that is a virtual button 146, overlaid on a peripheral device. Peripheral device 136 exists in physical reality. Virtual user interface 146 is projected onto a surface of peripheral device 136 by an artificial reality system and is rendered for output to an HMD so as to appear to a user of the HMD to be output by a display of peripheral device 136. While illustrated with an exploded view, with virtual user interface 146 shown positioned significantly above surface 220, an artificial reality system may render virtual user interface 146 directly on surface 220 or slightly offset from surface 220. This is referred to herein as being overlaid on surface 220.

Virtual button 146 corresponds to a position on surface 220. An area of virtual button 146 in the artificial reality environment corresponds to area 146' for virtual button 146 on surface 220. This correspondence may include, for instance, that the area of virtual button 146 in the artificial reality environment encompasses or maps to an area 146' on surface 122 in the physical environment where virtual button 146 is virtually rendered onto a video feedthrough from HMD-mounted or other cameras and displayed to the user.

The artificial reality system may detect a user interface gesture performed by a user at area 146', i.e., at a position corresponding to virtual button 146 on surface 200. The artificial reality system detection may detect the user interface gesture by processing inputs detected by surface 200, or by analyzing objects recognized within image data captured by image capture devices and/or sensors and external cameras to identify peripheral device 136 and/or a hand and/or arm of a user, and tracking movements of peripheral device 136, hand, and/or arm relative to an HMD to identify gestures performed by the user.

The techniques described in this disclosure may be implemented, at least in part, in hardware, software, firmware or any combination thereof. For example, various aspects of the described techniques may be implemented within one or more processors, including one or more microprocessors, DSPs, application specific integrated circuits (ASICs), field programmable gate arrays (FPGAs), or any other equivalent integrated or discrete logic circuitry, as well as any combinations of such components. The term "processor" or "processing circuitry" may generally refer to any of the foregoing logic circuitry, alone or in combination with other logic circuitry, or any other equivalent circuitry. A control unit comprising hardware may also perform one or more of the techniques of this disclosure.

Such hardware, software, and firmware may be implemented within the same device or within separate devices to support the various operations and functions described in this disclosure. In addition, any of the described units, modules or components may be implemented together or separately as discrete but interoperable logic devices. Depiction of different features as modules or units is intended to highlight different functional aspects and does not necessarily imply that such modules or units must be realized by separate hardware or software components. Rather, functionality associated with one or more modules or units may be performed by separate hardware or software components or integrated within common or separate hardware or software components.

The techniques described in this disclosure may also be embodied or encoded in a computer-readable medium, such as a computer-readable storage medium, containing instructions. Instructions embedded or encoded in a computer-readable storage medium may cause a programmable processor, or other processor, to perform the method, e.g., when the instructions are executed. Computer readable storage media may include random access memory (RAM), read only memory (ROM), programmable read only memory (PROM), erasable programmable read only memory (EPROM), electronically erasable programmable read only memory (EEPROM), flash memory, a hard disk, a CD-ROM, a floppy disk, a cassette, magnetic media, optical media, or other computer readable media.

As described by way of various examples herein, the techniques of the disclosure may include or be implemented in conjunction with an artificial reality system. As described, artificial reality is a form of reality that has been adjusted in some manner before presentation to a user, which may include, e.g., a virtual reality (VR), an augmented reality (AR), a mixed reality (MR), a hybrid reality, or some combination and/or derivatives thereof. Artificial reality content may include completely generated content or generated content combined with captured content (e.g., real-world photographs). The artificial reality content may include video, audio, haptic feedback, or some combination thereof, and any of which may be presented in a single channel or in multiple channels (such as stereo video that produces a three-dimensional effect to the viewer). Additionally, in some embodiments, artificial reality may be associated with applications, products, accessories, services, or some combination thereof, that are, e.g., used to create content in an artificial reality and/or used in (e.g., perform activities in) an artificial reality. The artificial reality system that provides the artificial reality content may be implemented on various platforms, including a head mounted device (HMD) connected to a host computer system, a standalone HMD, a mobile device or computing system, or any other hardware platform capable of providing artificial reality content to one or more viewers.

## Claims

1. An artificial reality system (10) comprising:
an image capture device (138) configured to capture image data;
a head-mounted display (HMD) (112) configured to output artificial reality content (122);
a peripheral device (136) including a display;
a user interface engine (328, 428) configured to detect the peripheral device (136) from the image data,
**characterized in that** the user interface engine (328, 428) is further configured to: send a communication to the peripheral device (136) to cause the peripheral device to deactivate the display, receive an indication that the display is deactivated, generate, in response to determining, based on the indication that the display is deactivated, a virtual user interface (137) appearing to be a surface of the peripheral device (136) and comprising one or more virtual user interface elements;
the artificial reality system (10) further comprising:
a rendering engine (322, 422) configured to render the artificial reality content and to render, at a user interface position locked relative to a position of the peripheral device (136) in the artificial reality content (122), the virtual user interface (137) for display at the HMD (112).

2. The artificial reality system of claim 1, further comprising:
a gesture detector (324) configured to detect a user interface gesture performed by a user at a position corresponding to one of the virtual user interface elements,
wherein the artificial reality system (10) is configured to perform, in response to the user interface gesture, one or more actions associated with the one of the virtual user interface elements.

3. The artificial reality system of claim 2, wherein the peripheral device (136) comprises a presence-sensitive interface configured to receive one or more inputs by a user,
wherein the gesture detector is configured to detect, based on the one or more inputs, the user interface gesture.

4. The artificial reality system of claim 2,
wherein to perform the one or more actions, the user interface engine (328, 428) is configured to modify the virtual user interface (137) to generate a modified virtual user interface comprising one or more modified virtual user interface elements, and
wherein the rendering engine (322, 422) is configured to render, at the user interface position, the modified virtual user interface (137) for display at the HMD (112).

5. The artificial reality system of claim 1,
wherein to render the virtual user interface the rendering engine (322, 422) is configured to render, overlaid on a surface of the peripheral device (136), the virtual user interface (137) and
wherein optionally the surface of the peripheral device (136) comprises a presence-sensitive interface.

6. The artificial reality system of claim 1, further comprising:
the peripheral device (136),
wherein the peripheral device comprises a gesture detector configured to detect a user interface gesture performed by a user at a position corresponding to one of the virtual user interface elements, and
wherein the HMD (112) is configured to perform, in response to the user interface gesture, one or more actions associated with the one of the virtual user interface elements.

7. The artificial reality system of claim 1, further comprising:
a gesture detector configured to detect a drawing gesture performed by a user at positions corresponding to positions on the virtual user interface (137),
wherein the user interface engine (328, 428) is configured to generate, in response to the drawing gesture, a modified virtual user interface comprising virtual markings at the positions on the virtual user interface,
wherein the rendering engine (322, 422) is configured to render, at the user interface position, the modified virtual user interface for display at the HMD (112).

8. The artificial reality system of claim 1, wherein the peripheral device (136) comprises one of a smartphone, smartwatch, or tablet computer.

9. A method comprising:
obtaining, by an artificial reality system (10) including a head-mounted display (HMD) (112), image data via an image capture device (138), the HMD (112) configured to output artificial reality content (122);
detecting from the image data, by the artificial reality system (10), a peripheral device (136) including a display;
**characterized by**:
sending, by the artificial reality system (10), a communication to the peripheral device (136) to cause the peripheral device to deactivate the display,
receiving, by the artificial reality system (10), an indication that the display is deactivated;
generating, by the artificial reality system (10), in response to determining, based on the indication that the display is deactivated, a virtual user interface appearing to be a surface of the peripheral device (136) and comprising one or more virtual user interface elements; and
rendering, by the artificial reality system (10), the artificial reality content and, at a user interface position locked relative to a position of the peripheral device (136) in the artificial reality content (122), the virtual user interface for display at the HMD (112).

10. The method of claim 9, further comprising:
detecting, by the artificial reality system (10), a user interface gesture performed by a user at a position corresponding to one of the virtual user interface elements;
performing, by the artificial reality system (10) in response to the user interface gesture, one or more actions associated with the one of the virtual user interface elements.

11. The method of claim 10,
wherein the method further comprises receiving, at a presence-sensitive interface of the peripheral device (136), one or more inputs by a user, wherein the detecting comprises detecting, based on the one or more inputs, the user interface gesture or
wherein performing the one or more actions comprises modifying the virtual user interface to generate a modified virtual user interface comprising one or more modified virtual user interface elements and wherein the method further comprises rendering, at the user interface position, the modified virtual user interface for display at the HMD (112).

12. A non-transitory, computer-readable medium comprising instructions that, when executed, cause one or more processors of an artificial reality system (10), including a head-mounted display (HMD) (112) configured to output artificial reality content (122), to perform the method of one of claims 9 to 11.

## Patentansprüche

1. Ein System (10) künstlicher Realität, das Folgendes beinhaltet:
eine Bilderfassungsvorrichtung (138), die konfiguriert ist, um Bilddaten zu erfassen;
eine am Kopf befestigte Anzeige (HMD) (112), die konfiguriert ist, um Inhalte (122) der künstlichen Realität auszugeben;
ein Peripheriegerät (136), das eine Anzeige umfasst;
eine Benutzerschnittstellenengine (328, 428), die konfiguriert ist, um das Peripheriegerät (136) anhand der Bilddaten zu erkennen,
**dadurch gekennzeichnet, dass** die Benutzerschnittstellenengine (328, 428) ferner für Folgendes konfiguriert ist:
Senden einer Nachrichtenübermittlung an das Peripheriegerät (136), um zu bewirken,
dass das Peripheriegerät die Anzeige deaktiviert,
Empfangen einer Angabe, dass die Anzeige deaktiviert ist,
Erzeugen, als Antwort auf das Bestimmen, basierend auf der Angabe, dass die Anzeige deaktiviert ist, einer virtuellen Benutzerschnittstelle (137), die als eine Oberfläche des Peripheriegeräts (136) erscheint und eines oder mehrere virtuelle Benutzerschnittstellenelemente beinhaltet;
wobei das System (10) künstlicher Realität ferner Folgendes beinhaltet:
eine Renderingengine (322, 422), die konfiguriert ist, um den Inhalt der künstlichen Realität zu rendern und an einer Benutzerschnittstellenposition, die relativ zu einer Position des Peripheriegeräts (136) in dem Inhalt (122) der künstlichen Realität fixiert ist, die virtuelle Benutzerschnittstelle (137) zur Anzeige an der HMD (112) zu rendern.

2. System künstlicher Realität gemäß Anspruch 1, das ferner Folgendes beinhaltet:
einen Gestenerkenner (324), der konfiguriert ist, um eine Benutzerschnittstellengeste zu erkennen, die von einem Benutzer an einer Position durchgeführt wird, die einem der virtuellen Benutzerschnittstellenelemente entspricht,
wobei das System (10) künstlicher Realität konfiguriert ist, um als Antwort auf die Benutzerschnittstellengeste eine oder mehrere Aktionen durchzuführen, die mit dem einen der virtuellen Benutzerschnittstellenelemente assoziiert sind.

3. System künstlicher Realität gemäß Anspruch 2,
wobei das Peripheriegerät (136) eine präsenzempfindliche Schnittstelle beinhaltet, die konfiguriert ist, um eine oder mehrere Eingaben durch einen Benutzer zu empfangen, wobei der Gestenerkenner konfiguriert ist, um die Benutzerschnittstellengeste basierend auf der einen oder den mehreren Eingaben zu erkennen.

4. System künstlicher Realität gemäß Anspruch 2,
wobei die Benutzerschnittstellenengine (328, 428) zum Durchführen der einen oder der mehreren Aktionen konfiguriert ist, um die virtuelle Benutzerschnittstelle (137) zu modifizieren, um eine modifizierte virtuelle Benutzerschnittstelle zu erzeugen, die ein oder mehrere modifizierte virtuelle Benutzerschnittstellenelemente beinhaltet, und
wobei die Renderingengine (322, 422) konfiguriert ist, um an der Benutzerschnittstellenposition die modifizierte virtuelle Benutzerschnittstelle (137) zur Anzeige an der HMD (112) zu rendern.

5. System künstlicher Realität gemäß Anspruch 1,
wobei die Renderingengine (322, 422) zum Rendern der virtuellen Benutzerschnittstelle konfiguriert ist, um die virtuelle Benutzerschnittstelle (137) überlagert auf einer Oberfläche des Peripheriegeräts (136) zu rendern, und
wobei die Oberfläche des Peripheriegeräts (136) optional eine präsenzempfindliche Schnittstelle beinhaltet.

6. System künstlicher Realität gemäß Anspruch 1, das ferner Folgendes beinhaltet:
das Peripheriegerät (136),
wobei das Peripheriegerät einen Gestenerkenner beinhaltet, der konfiguriert ist, um eine Benutzerschnittstellengeste zu erkennen, die von einem Benutzer an einer Position durchgeführt wird, die einem der virtuellen Benutzerschnittstellenelemente entspricht, und
wobei die HMD (112) konfiguriert ist, um als Antwort auf die Benutzerschnittstellengeste eine oder mehrere Aktionen durchzuführen, die mit dem einen der virtuellen Benutzerschnittstellenelemente assoziiert sind.

7. System künstlicher Realität gemäß Anspruch 1, das ferner Folgendes beinhaltet:
einen Gestenerkenner, der konfiguriert ist, um eine Malgeste zu erkennen, die von einem Benutzer an Positionen durchgeführt wird, die Positionen auf der virtuellen Benutzerschnittstelle (137) entsprechen,
wobei die Benutzerschnittstellenengine (328, 428) konfiguriert ist, um als Antwort auf die Malgeste eine modifizierte virtuelle Benutzerschnittstelle zu erzeugen, die virtuelle Markierungen an den Positionen auf der virtuellen Benutzerschnittstelle beinhaltet,
wobei die Renderingengine (322, 422) konfiguriert ist, um an der Benutzerschnittstellenposition die modifizierte virtuelle Benutzerschnittstelle zur Anzeige an der HMD (112) zu rendern.

8. System künstlicher Realität gemäß Anspruch 1, wobei das Peripheriegerät (136) eines von einem Smartphone, einer Smartwatch oder einem Tablet-Computer beinhaltet.

9. Ein Verfahren, das Folgendes beinhaltet:
Erhalten, durch ein System (10) künstlicher Realität, das eine am Kopf befestigte Anzeige (HMD) (112) umfasst, von Bilddaten über eine Bilderfassungsvorrichtung (138), wobei die HMD (112) konfiguriert ist, um Inhalt (122) der künstlichen Realität auszugeben;
Erkennen, anhand der Bilddaten, durch das System (10) künstlicher Realität, eines Peripheriegeräts (136), das eine Anzeige umfasst;
**gekennzeichnet durch**:
Senden, durch das System (10) künstlicher Realität, einer Nachrichtenübermittlung an das Peripheriegerät (136), um zu bewirken, dass das Peripheriegerät die Anzeige deaktiviert,
Empfangen, durch das System (10) künstlicher Realität, einer Angabe, dass die Anzeige deaktiviert ist;
Erzeugen, durch das System (10) künstlicher Realität, als Antwort auf das Bestimmen, basierend auf der Angabe, dass die Anzeige deaktiviert ist, einer virtuellen Benutzerschnittstelle, die als eine Oberfläche des Peripheriegeräts (136) erscheint und ein oder mehrere virtuelle Benutzerschnittstellenelemente beinhaltet; und
Rendern, durch das System (10) künstlicher Realität, des Inhalts der künstlichen Realität und an einer Benutzerschnittstellenposition, die relativ zu einer Position des Peripheriegeräts (136) in dem Inhalt (122) der künstlichen Realität fixiert ist, der virtuellen Benutzerschnittstelle zur Anzeige an der HMD (112).

10. Verfahren gemäß Anspruch 9, das ferner Folgendes beinhaltet:
Erkennen, durch das System (10) künstlicher Realität, einer Benutzerschnittstellengeste, die von einem Benutzer an einer Position durchgeführt wird, die einem der virtuellen Benutzerschnittstellenelemente entspricht;
Durchführen, durch das System (10) künstlicher Realität als Antwort auf die Benutzerschnittstellengeste, einer oder mehrerer Aktionen, die mit dem einen der virtuellen Benutzerschnittstellenelemente assoziiert sind.

11. Verfahren gemäß Anspruch 10,
wobei das Verfahren ferner das Empfangen, an einer präsenzempfindlichen Schnittstelle des Peripheriegeräts (136), einer oder mehrerer Eingaben durch einen Benutzer beinhaltet, wobei das Erkennen das Erkennen, basierend auf der einen oder den mehreren Eingaben, der Benutzerschnittstellengeste beinhaltet, oder
wobei das Durchführen der einen oder der mehreren Aktionen das Modifizieren der virtuellen Benutzerschnittstelle beinhaltet, um eine modifizierte virtuelle Benutzerschnittstelle zu erzeugen, die ein oder mehrere modifizierte virtuelle Benutzerschnittstellenelemente beinhaltet, und wobei das Verfahren ferner das Rendern, an der Benutzerschnittstellenposition, der modifizierten virtuellen Benutzerschnittstelle zur Anzeige an der HMD (112) beinhaltet.

12. Ein nichttransitorisches, computerlesbares Medium, das Anweisungen beinhaltet, die, wenn sie ausgeführt werden, bewirken, dass ein oder mehrere Prozessoren eines Systems (10) künstlicher Realität, das eine am Kopf befestigte Anzeige (HMD) (112) umfasst, die konfiguriert ist, um Inhalt (122) der künstlichen Realität auszugeben, das Verfahren gemäß einem der Ansprüche 9 bis 11 durchführen.

## Revendications

1. Un système de réalité artificielle (10) comprenant :
un dispositif de capture d'images (138) configuré pour capturer des données d'image ;
un visiocasque (HMD, *Head-Mounted Display*) (112) configuré pour délivrer en sortie un contenu de réalité artificielle (122) ;
un dispositif périphérique (136) incluant une unité d'affichage ;
un moteur d'interface utilisateur (328, 428) configuré pour détecter le dispositif périphérique (136) à partir des données d'image,
**caractérisé en ce que** le moteur d'interface utilisateur (328, 428) est configuré en outre pour :
envoyer une communication au dispositif périphérique (136) afin d'amener le dispositif périphérique à désactiver l'unité d'affichage,
recevoir une indication selon laquelle l'unité d'affichage est désactivée, générer, en réponse à une détermination, sur la base de l'indication que l'unité d'affichage est désactivée, une interface utilisateur virtuelle (137) semblant être une surface du dispositif périphérique (136) et comprenant un ou plusieurs éléments d'interface utilisateur virtuelle ;
le système de réalité artificielle (10) comprenant en outre :
un moteur de rendu (322, 422) configuré pour rendre le contenu de réalité artificielle et pour rendre, au niveau d'une position d'interface utilisateur verrouillée relativement à une position du dispositif périphérique (136) dans le contenu de réalité artificielle (122), l'interface utilisateur virtuelle (137) pour son affichage au niveau du HMD (112).

2. Le système de réalité artificielle de la revendication 1, comprenant en outre :
un détecteur de gestes (324) configuré pour détecter un geste pour interface utilisateur réalisé par un utilisateur au niveau d'une position correspondant à l'un des éléments d'interface utilisateur virtuelle,
le système de réalité artificielle (10) étant configuré pour réaliser, en réponse au geste pour interface utilisateur, une ou plusieurs actions associées à cet un des éléments d'interface utilisateur virtuelle.

3. Le système de réalité artificielle de la revendication 2,
où le dispositif périphérique (136) comprend une interface sensible à la présence configurée pour recevoir une ou plusieurs entrées par un utilisateur,
où le détecteur de gestes est configuré pour détecter, sur la base de ces une ou plusieurs entrées, le geste pour interface utilisateur.

4. Le système de réalité artificielle de la revendication 2,
où pour réaliser ces une ou plusieurs actions, le moteur d'interface utilisateur (328, 428) est configuré pour modifier l'interface utilisateur virtuelle (137) afin de générer une interface utilisateur virtuelle modifiée comprenant un ou plusieurs éléments d'interface utilisateur virtuelle modifiée, et
où le moteur de rendu (322, 422) est configuré pour rendre, au niveau de la position d'interface utilisateur, l'interface utilisateur virtuelle modifiée (137) pour son affichage au niveau du HMD (112).

5. Le système de réalité artificielle de la revendication 1,
où pour rendre l'interface utilisateur virtuelle le moteur de rendu (322, 422) est configuré pour rendre, superposée sur une surface du dispositif périphérique (136), l'interface utilisateur virtuelle (137) et
où facultativement la surface du dispositif périphérique (136) comprend une interface sensible à la présence.

6. Le système de réalité artificielle de la revendication 1, comprenant en outre :
le dispositif périphérique (136),
où le dispositif périphérique comprend un détecteur de gestes configuré pour détecter un geste pour interface utilisateur réalisé par un utilisateur au niveau d'une position correspondant à l'un des éléments d'interface utilisateur virtuelle, et
où le HMD (112) est configuré pour réaliser, en réponse au geste pour interface utilisateur, une ou plusieurs actions associées à cet un des éléments d'interface utilisateur virtuelle.

7. Le système de réalité artificielle de la revendication 1, comprenant en outre :
un détecteur de gestes configuré pour détecter un geste de tracé réalisé par un utilisateur au niveau de positions correspondant à des positions sur l'interface utilisateur virtuelle (137),
où le moteur d'interface utilisateur virtuelle (328, 428) est configuré pour générer, en réponse au geste de tracé, une interface utilisateur virtuelle modifiée comprenant des marquages virtuels au niveau des positions sur l'interface utilisateur virtuelle,
où le moteur de rendu (322, 422) est configuré pour rendre, au niveau de la position d'interface utilisateur, l'interface utilisateur virtuelle modifiée pour son affichage au niveau du HMD (112).

8. Le système de réalité artificielle de la revendication 1, où le dispositif périphérique (136) comprend soit un téléphone intelligent, soit une montre intelligente, soit une tablette électronique.

9. Un procédé comprenant :
l'obtention, par un système de réalité artificielle (10) incluant un visiocasque (HMD) (112), de données d'image par l'intermédiaire d'un dispositif de capture d'images (138), le HMD (112) étant configuré pour délivrer en sortie un contenu de réalité artificielle (112) ;
la détection à partir des données d'image, par le système de réalité artificielle (10), d'un dispositif périphérique (136) incluant une unité d'affichage ;
**caractérisé par** :
l'envoi, par le système de réalité artificielle (10), d'une communication au dispositif périphérique (136) afin d'amener le dispositif périphérique à désactiver l'unité d'affichage,
la réception, par le système de réalité artificielle (10), d'une indication que l'unité d'affichage est désactivée ;
la génération, par le système de réalité artificielle (10), en réponse à une détermination, sur la base de l'indication que l'unité d'affichage est désactivée, d'une interface utilisateur virtuelle semblant être une surface du dispositif périphérique (136) et comprenant un ou plusieurs éléments d'interface utilisateur virtuelle ; et
le rendu, par le système de réalité artificielle (10), du contenu de réalité artificielle et, au niveau d'une position d'interface utilisateur verrouillée relativement à une position du dispositif périphérique (136) dans le contenu de réalité artificielle (122), de l'interface utilisateur virtuelle pour son affichage au niveau du HMD (112).

10. Le procédé de la revendication 9, comprenant en outre :
la détection, par le système de réalité artificielle (10), d'un geste pour interface utilisateur réalisé par un utilisateur au niveau d'une position correspondant à l'un des éléments d'interface utilisateur virtuelle ;
la réalisation, par le système de réalité artificielle (10) en réponse au geste pour interface utilisateur, d'une ou de plusieurs actions associées à cet un des éléments d'interface utilisateur virtuelle.

11. Le procédé de la revendication 10,
le procédé comprenant en outre la réception, au niveau d'une interface sensible à la présence du dispositif périphérique (136), d'une ou de plusieurs entrées par un utilisateur, où la détection comprend la détection, sur la base de ces une ou plusieurs entrées, du geste pour interface utilisateur ou
où la réalisation de ces une ou plusieurs actions comprend la modification de l'interface utilisateur virtuelle afin de générer une interface utilisateur virtuelle modifiée comprenant un ou plusieurs éléments d'interface utilisateur virtuelle modifiée et le procédé comprenant en outre le rendu, au niveau de la position d'interface utilisateur, de l'interface utilisateur virtuelle modifiée pour son affichage au niveau du HMD (112).

12. Un support non transitoire lisible par ordinateur comprenant des instructions qui, lorsqu'elles sont exécutées, amènent un ou plusieurs processeurs d'un système de réalité artificielle (10), incluant un visiocasque (HMD) (112) configuré pour délivrer en sortie un contenu de réalité artificielle (122), à réaliser le procédé de l'une des revendications 9 à 11.
